(19) Europäisches Patentamt / European Patent Office / Office européen des brevets

(11) **EP 4 625 987 A1**

(12) **EUROPEAN PATENT APPLICATION**
published in accordance with Art. 153(4) EPC

(43) Date of publication:
01.10.2025 Bulletin 2025/40

(21) Application number: 23893904.5

(22) Date of filing: 22.11.2023

(51) International Patent Classification (IPC):
*H04N 19/503* (2014.01)

(52) Cooperative Patent Classification (CPC):
H04N 19/503; H04N 19/513

(86) International application number:
PCT/CN2023/133303

(87) International publication number:
WO 2024/109816 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.11.2022 CN 202211493517

(71) Applicant: Boe Technology Group Co., Ltd.
Beijing 100015 (CN)

(72) Inventors:
• CUI, Tenghe
Beijing 100176 (CN)
• SHU, Long
Beijing 100176 (CN)
• ZHANG, Qian
Beijing 100176 (CN)

(74) Representative: Brötz, Helmut et al
Rieder & Partner mbB
Patentanwälte - Rechtsanwalt
Yale-Allee 26
42329 Wuppertal (DE)

(54) **VIDEO DATA PROCESSING METHOD AND DEVICE, DISPLAY DEVICE, AND STORAGE MEDIUM**

(57) A video data processing method and a video data processing device, a display device, and a storage medium. The method comprises: for a current video block of a video, determining to use a first inter-frame prediction mode for encoding and decoding (S101); on the basis of the determination, performing conversion between the current video block and a bitstream of the video, wherein the derivation of a motion vector of the current video block in the first inter-frame prediction mode is based on a basic region, corresponding to a first display mode, in the video (S102). By means of the method, the bitstream can be partially decoded according to a region which actually needs to be displayed, thereby reducing the decoding resource consumption of the undisplayed part and improving the encoding and decoding efficiency.

10

For a current video block of a video, determine to use a first inter-frame prediction mode for encoding and decoding — S101

On the basis of the determining, perform conversion between the current video block and a bitstream of the video, wherein the derivation of a motion vector of the current video block in the first inter-frame prediction mode is based on a basic region, corresponding to a first display mode, in the video — S102

Fig. 9

**Description**

TECHNICAL FIELD

Embodiments of the present disclosure relate to a video data processing method and a video data processing apparatus, a display apparatus, and a computer-readable storage medium.

BACKGROUND

Digital video functionality may be incorporated into a wide variety of devices, including digital televisions, digital live systems, wireless broadcast systems, laptop or desktop computers, tablet computers, electronic readers, digital cameras, digital recording devices, digital media players, video game devices, video game machines, smart phones, video teleconferencing devices, and video streaming devices, etc. Digital video devices may implement video coding techniques such as those video coding techniques described in the standards defined by MPEG-2, MPEG-4, ITU-T H. 263, ITU-T H. 264/MPEG-4, Part 10, advanced video coding (AVC), the high efficiency video coding (HEVC), ITU-T H. 265/ high efficiency video coding, and extensions to such standards. By implementing the foregoing video coding techniques, video devices can more efficiently transmit, receive, encode, decode, and/or store digital video information.

SUMMARY

At least one embodiment of the present disclosure provides a video data processing method. The video data processing method includes: for a current video block of a video, determining to use a first inter-prediction mode for coding, and performing a conversion between the current video block and a bitstream of the video based on the determining. In the first inter-prediction mode, a derivation of a motion vector of the current video block is based on a basic area in the video corresponding to a first display mode.

For example, in the method provided by at least one embodiment of the present disclosure, for a current video frame of the video, a first display area along an extension direction from a video extension starting position defined by the first display mode is used as the basic area.

For example, in the method provided by at least one embodiment of the present disclosure, the motion vector is in a first motion vector prediction range in response to the current video block being within the first display area.

For example, in the method provided by at least one embodiment of the present disclosure, the first motion vector prediction range is determined based on a position of the current video block, motion vector prediction precision, and a boundary of the first display area.

For example, in the method provided by at least one embodiment of the present disclosure, the current video frame includes the first display area and at least one display sub-area arranged adjacently in sequence along the extension direction, and the extension direction is from left to right, and

in response to the current video block being within a first display sub-area on a right side of the first display area in the current video frame, the motion vector is in a second motion vector prediction range.

For example, in the method provided by at least one embodiment of the present disclosure, the second motion vector prediction range is determined based on a position of the current video block, motion vector prediction precision, a boundary of the first display area, and a width of the first display sub-area.

For example, in the method provided by at least one embodiment of the present disclosure, in response to the current video block being within a k-th first display sub-area on the right side of the first display area and k=1, the second motion vector prediction range is equal to the first motion vector prediction range.

For example, in the method provided by at least one embodiment of the present disclosure, in response to the current video block being within a k-th first display sub-area on the right side of the first display area and k being an integer greater than 1, a first right boundary of the first motion vector prediction range is different from a second right boundary of the second motion vector prediction range.

For example, in the method provided by at least one embodiment of the present disclosure, the current video frame includes the first display area and at least one display sub-area arranged adjacently in sequence along the extension direction, and the extension direction is from top to bottom, and

in response to the current video block being within a second display sub-area below the first display area, the motion vector is in a third motion vector prediction range.

For example, in the method provided by at least one embodiment of the present disclosure, the third motion vector prediction range is determined based on a position of the current video block, motion vector prediction precision, a boundary of the first display area, and a height of the second display sub-area.

For example, in the method provided by at least one embodiment of the present disclosure, in response to the current video block being within an m-th second display sub-area below the first display area and m=1, the third motion vector prediction range is equal to the first motion vector prediction range.

For example, in the method provided by at least one embodiment of the present disclosure, in response to the current video block being within an m-th second display sub-area below the first display area and m being an integer greater than 1, a first bottom boundary of the first motion vector prediction range is different from a third bottom boundary of the third motion vector prediction range.

For example, in the method provided by at least one embodiment of the present disclosure, in response to the current video block being outside the basic area, a temporal candidate motion vector predictor in a motion vector prediction candidate list of the current video block is calculated based on a spatial candidate motion vector predictor.

For example, in the method provided by at least one embodiment of the present disclosure, in response to the current video block being within the basic area, all reference pixels used by the current video block are in the basic area.

For example, in the method provided by at least one embodiment of the present disclosure, the first inter-prediction mode includes a Merge prediction mode, an advanced motion vector prediction AMVP mode, a Merge mode with a motion vector difference, a bi-directional weighted prediction mode, or an affine prediction mode.

At least one embodiment of the present disclosure further provides a video data processing method. The video data processing method includes: receiving a bitstream of a video; determining that a current video block of the video is coded using a first inter-prediction mode; and decoding the bitstream based on the determining. In the first inter-prediction mode, a derivation of a motion vector of the current video block is based on a basic area in the video corresponding to a first display mode.

For example, in the method provided by at least one embodiment of the present disclosure, the decoding the bitstream includes: determining an area to be decoded of a current video frame of the video, where the area to be decoded at least includes a first display area corresponding to the basic area.

For example, in the method provided by at least one embodiment of the present disclosure, the decoding the bitstream includes: determining the area to be decoded based on at least one selected from the group consisting of a quantity of pixels to be displayed and a quantity of coding units to be displayed of the current video frame, a quantity of coding units of the first display area, a quantity of displayed pixels of a previous video frame, and a quantity of coding units of a decoded area of the previous video frame.

For example, in the method provided by at least one embodiment of the present disclosure, the determining the area to be decoded includes: in response to the quantity of coding units to be displayed of the current video frame being greater than the quantity of coding units of the decoded area of the previous video frame, or in response to the quantity of coding units to be displayed of the current video frame being equal to the quantity of coding units of the decoded area of the previous video frame, and the quantity of pixels to be displayed of the current video frame being greater than the quantity of displayed pixels of the previous video frame, determining that the area to be decoded includes the decoded area of the previous video frame and one new display sub-area.

For example, in the method provided by at least one embodiment of the present disclosure, the determining the area to be decoded includes: in response to the quantity of coding units to be displayed of the current video frame being greater than the quantity of coding units of the first display area, and the quantity of coding units to be displayed of the current video frame being smaller than the quantity of coding units of the decoded area of the previous video frame, or in response to the quantity of coding units to be displayed of the current video frame being greater than the quantity of coding units of the first display area, the quantity of coding units to be displayed of the current video frame being equal to the quantity of coding units of the decoded area of the previous video frame, and the quantity of pixels to be displayed of the current video frame being not greater than the quantity of displayed pixels of the previous video frame, determining that the area to be decoded of the current video frame includes the area to be displayed of the current video frame.

At least one embodiment of the present disclosure further provides a video data processing apparatus including a determining module and a performing module. The determining module is configured determine, for a current video block of the video, to use a first inter-prediction mode for coding. The performing module is configured to perform a conversion between the current video block and a bitstream of the video based on the determining. In the first inter-prediction mode, a derivation of a motion vector of the current video block is based on a basic area in the video corresponding to a first display mode.

At least one embodiment of the present disclosure further provides a display apparatus, which includes a video data processing apparatus and a scroll screen. The video data processing apparatus is configured to decode a received bitstream according to the method provided by any one of the above mentioned embodiments and send a decoded pixel value to the scroll screen for display.

For example, in the display apparatus provided by at least one embodiment of the present disclosure, in response to the scroll screen including a display area and a non-display area in operation, the video data processing apparatus decodes the bitstream based on a size of the display area at a current moment and a previous frame moment.

For example, the display apparatus provided by at least one embodiment of the present disclosure further includes a curling state judgment apparatus. The curling state judgment apparatus is configured to detect a size of a display area of the scroll screen and transmit the size of the display area to the video data processing apparatus, to cause the video data processing apparatus to decode the bitstream based on the size of the display area at a current moment and a previous frame moment.

For example, at least one embodiment of the present disclosure further provides a video data processing apparatus, which includes a processor and a memory. The memory includes one or more computer program modules. The one or more computer program modules are stored in the memory and configured to be executed by the processor, and the one or more computer program modules includes instructions used to perform the video data processing method provided by any one of the above mentioned embodiments.

For example, at least one embodiment of the present disclosure further provides a computer-readable storage medium that stores computer instructions thereon. When the instructions are executed by a processor, the processor is caused to implement the steps of the video data processing method provided by any one of the above-mentioned embodiments.

BRIEF DESCRIPTION OF DRAWINGS

In order to more clearly illustrate the technical solution of the disclosed embodiments, a brief introduction will be given to the accompanying drawings of the embodiments. It is obvious that the accompanying drawings described below only relate to some embodiments of the present disclosure, and do not limit the present disclosure.

Fig. 1 is a schematic structural diagram of a scroll screen provided by at least one embodiment of the present disclosure.

Fig. 2 is a block diagram of an exemplary video coding system provided by at least one embodiment of the present disclosure;

Fig. 3 is a block diagram of an exemplary video encoder provided by at least one embodiment of the present disclosure;

Fig. 4 is a block diagram of an exemplary video decoder provided by at least one embodiment of the present disclosure;

Fig. 5 is a schematic diagram of an encoding structure for all intra configuration provided by at least one embodiment of the present disclosure;

Fig. 6 is a schematic diagram of an encoding structure for low delay configuration provided by at least one embodiment of the present disclosure;

Fig. 7A is a schematic diagram of an inter-prediction encoding provided by at least one embodiment of the present disclosure;

Fig. 7B is a schematic flow diagram of an inter-prediction technology provided by at least one embodiment of the present disclosure;

Fig. 8A is a schematic diagram of an affine motion compensation provided by at least one embodiment of the present disclosure;

Fig. 8B is a schematic diagram of another affine motion compensation provided by at least one embodiment of the present disclosure;

Fig. 9 is a schematic diagram of a video data processing method provided by at least one embodiment of the present disclosure;

Fig. 10 is a schematic diagram of a video coding for a scroll screen provided by at least one embodiment of the present disclosure;

Fig. 11 is a schematic diagram of a division manner of a current video frame provided by at least one embodiment of the present disclosure;

Fig. 12A is a schematic diagram of a rotational axis direction of a scroll screen provided by at least one embodiment of the present disclosure;

Fig. 12B is a schematic diagram of a rotational axis direction of another scroll screen provided by at least one embodiment of the present disclosure;

Fig. 13 is an encoding schematic diagram of a current video block within the first display area provided by at least one embodiment of the present disclosure;

Fig. 14 is an encoding schematic diagram of a current video block positioned at a boarder of the first display area provided by at least one embodiment of the present disclosure;

Fig. 15 is a schematic diagram of another video data processing method provided by at least one embodiment of the present disclosure;

Fig. 16 is a schematic block diagram of a video coding system in a low delay configuration according to at least one embodiment of the present disclosure;

Fig. 17 is a schematic flow diagram of a video data processing method in a low delay configuration according to at least one embodiment of the present disclosure;

Fig. 18 is a schematic flow diagram of a video data processing apparatus according to at least one embodiment of the present disclosure;

Fig. 19 is a schematic block diagram of another video data processing apparatus according to at least one embodiment of the present disclosure;

Fig. 20 is a schematic block diagram of yet another video data processing apparatus provided by at least one embodiment of the present disclosure; and

Fig. 21 is a schematic block diagram of a non-instantaneous readable storage medium provided by at least one embodiment of the present disclosure.

DETAILED DESCRIPTION

To make the objects, technical solutions and advantages of the embodiments of the present disclosure more apparent, a more clear and complete description of the technical solutions of the embodiments of the present disclosure will be rendered by reference to the accompanying drawings. The embodiments described below are only some, but not all embodiments of the present disclosure. Based on the embodiments of the present disclosure described, all other embodiments obtained by a person skilled in the art without inventive effort fall within the scope of protection of the present disclosure.

Flow diagrams are used in the present disclosure to illustrate operations performed by a system according to embodiments of the present application. It should be understood that the preceding or following operations are not necessarily performed in the order in which they are performed. Rather, the various steps may be processed in reverse order or simultaneously, as desired. Also, other operations may be added to or removed from the processes.

Unless otherwise defined, technical or scientific terms used in the present disclosure shall have the ordinary meaning as understood by a person skilled in the art to which the present disclosure belongs. "First", "second", and similar terms used in the present disclosure do not denote any order, quantity, or importance, but are rather used to distinguish different constituent parts. Similarly, the terms "one", "an", or "the" do not denote a limitation of quantity, but rather denote the presence of at least one of the referenced item. The word "include" or "comprise", and the like, means that the elements or items preceding the word encompass the elements or items listed after the word and equivalents thereof, but do not exclude other elements or items. "Connect" or "attach" and like terms are not limited to physical or mechanical connections, but may include electrical connections, whether direct or indirect. "Up", "down", "left", "right", etc. are only used to indicate a relative positional relationship, which may change accordingly when the absolute position of the object being described changes.

As the demand for high-resolution video increases, video coding methods and techniques are ubiquitous in modern technology. A video codec typically includes electronic circuitry or software that compresses or decompresses a digital video and are continually being improved to provide higher encoding efficiency. The video codec converts an uncompressed video to a compressed format and vice versa. There are complex relationships between the video quality, the amount of data (determined by the bit rate) used to represent the video, the complexity of the encoding and decoding algorithms, the sensitivity to data loss and errors, the ease of editing, random access, and end-to-end delay (delay time). Compressed formats typically conform to standard video compression specifications, such as the high efficiency video coding (HEVC) standard (also known as H. 265), the versatile video coding (VVC) standard to be finalized (also known as H. 266), or other current and/or future video coding standards.

It will be understood that embodiments of the techniques to which the present disclosure relates may be applied to existing video coding standards (e.g., AVC, HEVC, and VVC) and future standards to improve the compression performance. Reference may be made herein to existing video coding standards for the description of the coding operation, and it will be understood that the methods provided in the present disclosure are not limited to the described video coding standards.

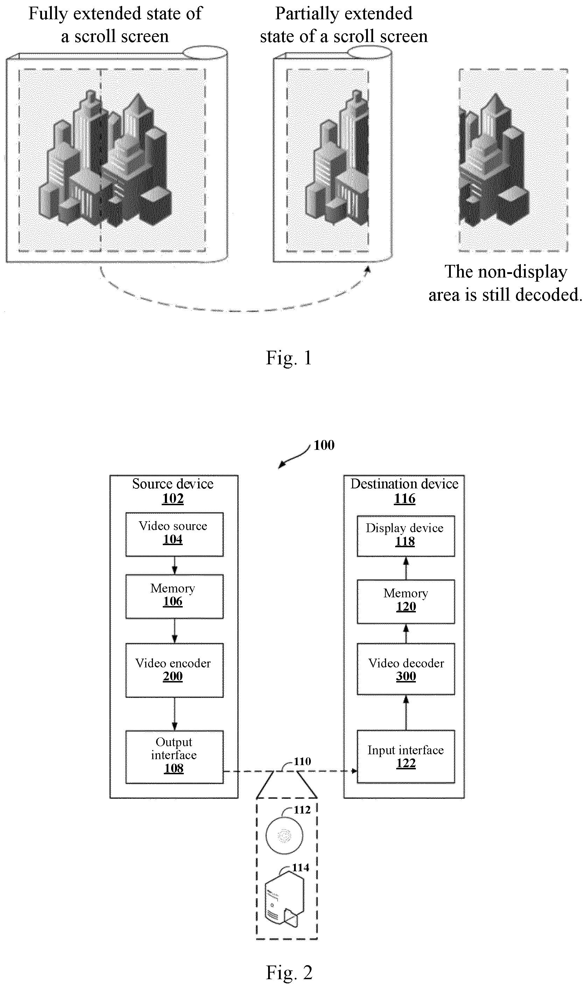

At present, with the emergence of folding screen mobile phone, folding screen panel and other terminal products, people pay more and more attention to the study of flexible display screen, such as flexible scroll screen. Fig. 1 is a schematic structural diagram of a scroll screen provided by at least one embodiment of the present disclosure. As shown in Fig. 1, a scroll screen generally includes a fully extended state and a partially extended state. An unrolled portion of the scroll screen is considered as a display area, and a rolled portion is considered as an undisplayed area. It should be noted that in various embodiments of the present disclosure, the scroll screen may be any type of display screen having a variable display area, and includes but is not limited to the scroll screen configuration shown in Fig. 1. In general, during actual use of the scroll screen, such as during rolling, a video frame of the rolled portion of the scroll screen does not need to be displayed, but that portion of the video frame is still decoded, resulting in a waste of decoding resources.

At least in order to solve the above-mentioned technical problem, at least one embodiment of the present disclosure provides a video data processing method, and the method includes: for a current video block of a video, determining to use a first inter-prediction mode for coding; and performing a conversion between the current video block and a bitstream of the video based on the determining. In the first inter-prediction mode, a derivation of a motion vector of the current video block is based on a basic area in the video corresponding to a first display mode.

Accordingly, at least one embodiment of the present disclosure further provides a video data processing apparatus, a display apparatus and a computer-readable storage medium corresponding to the above-mentioned video data processing method.

With the video data processing method according to at least one embodiment of the present disclosure, by deriving a motion vector of a current video block based on a basic area in a video corresponding to a first display mode, a bitstream of the video can be partially decoded according to the display area actually displayed, thereby reducing the consumption of decoding resources of the undisplayed portion, effectively improving the efficiency of video coding, and further improving the product use experience of a user.

It should be noted that, in embodiments of the present disclosure, words such as "above", "below", "left", "right", etc. used to describe the position of neighboring blocks or reference pixels relative to the current video block, have the same meaning as defined in video coding standards (e.g. AVC, HEVC, and VVC). For example, in some examples, "left" and "right" denote two sides in a horizontal direction, respectively, and "above" and "below" denote two sides in a vertical direction, respectively.

Non-limiting illustrations of layout design methods provided in accordance with the present disclosure are provided below by way of multiple examples or embodiments and instances thereof. As described below, various features of the specific examples or embodiments may be combined with one another without departing from one another to provide new examples or embodiments that are also within the scope of the present disclosure.

At least one embodiment of the present disclosure herein provides a coding system. It will be understood that in the present disclosure, the same structured codec can be employed for the encoding end and the decoding end.

Fig. 2 is a block diagram illustrating an exemplary video coding system 1000 that may perform some embodiments in accordance with the present disclosure. The techniques of the present disclosure generally relate to coding (encoding and/or decoding) video data. In general, the video data includes any data used to process video, and thus, the video data may include an unencoded original video, an encoded video, a decoded (e.g. reconstructed) video, and video metadata such as syntax data. The video may include one or more pictures, alternatively referred to as a sequence of pictures.

As shown in Fig. 2, in this example, the system 1000 includes a source device 102 that is used to provide encoded video data to be decoded for display by a destination device 116, and the encoded video data is used to form a bitstream, which is transmitted to a decoding end. The bitstream may also be referred to as a bit stream. In particular, the source device 102 provides encoded video data to the destination device 116 via a computer-readable medium 110. The source device 102 and the destination device 116 may be implemented as a variety of devices, such as a desktop computer, a notebook (i.e. portable) computer, a tablet computer, a mobile device, a set-top box, a smartphone, a handheld telephone, a television, a camera, a display device, a digital media player, a video game player, a video streaming device, etc. In some cases, the source device 102 and the destination device 116 may be configured for wireless communication, and thus may also be referred to as wireless communication devices.

In the example of Fig. 2, the source device 102 includes a video source 104, a memory 106, a video encoder 200, and an output interface 108. The destination device 116 includes an input interface 122, a video decoder 300, a memory 120, and a display device 118. According to some embodiments of the present disclosure, the video encoder 200 of the source device 102 and the video decoder 300 of the destination device 116 may be configured to implement the encoding methods and decoding methods according to some embodiments of the present disclosure. Thus, the source device 102 represents an example of a video encoding device and the destination device 116 represents an example of a video decoding device. In other examples, the source device 102 and the destination device 116 may include other assemblies or configurations. For example, the source device 102 may receive video data from an external video source, such as an external camera. Also, the destination device 116 may be connected to an external display device without the need for a built-in integrated display device 118.

The system 1000 shown in Fig. 2 is only one example. In general, any digital video encoding and/or decoding device may perform the encoding methods and decoding methods according to some embodiments of the present disclosure. The source device 102 and the destination device 116 are merely examples of such coding devices, in which the source device 102 generates a bitstream for transmission to the destination device 116. The present disclosure refers to a "coding" device as a device that performs data coding (encoding and/or decoding). Therefore, the video encoder 200 and the video decoder 300 respectively represent examples of coding devices.

In some examples, the devices 102 and 116 operate in a substantially symmetrical manner such that both devices 102 and 116 include video encoding and decoding assemblies, i.e. both devices 102 and 116 may implement video encoding and decoding processes. Thus, the system 1000 can support uni-directional or bi-directional video transmission between the video devices 102 and 116, such as may be used for video streaming, video playback, video broadcasting, or video telephony communications.

In general, the video source 104 represents a source of video data (i.e., raw video data that has not been encoded) and provides a continuous series of pictures (also referred to as "frames") of video data to the video encoder 200, and the video encoder 200 encodes the data of the pictures. The video source 104 of the source device 102 may include a video capture device, such as a video camera, a video archive containing previously captured raw video, and/or a video feed interface for receiving video from a video content provider. As another alternative, the video source 104 may generate computer graphics-based data as source video or a combination of live video, archived video, and computer-generated video. In various cases, the video encoder 200 encodes captured, pre-captured, or computer-generated video data. The video encoder 200 may rearrange pictures from an order as the pictures are received (sometimes referred to as a "display order ") into an encoding order for encoding. The video encoder 200 may generate a bitstream that includes encoded video data. The source device 102 may then output the generated bitstream via the output interface 108 to the computer-readable medium 110 for receipt and/or search by, for example, the input interface 122 of the destination device 116.

The memory 106 of the source device 102 and the memory 120 of the destination device 116 represent a general purpose memory. In some examples, the memory 106 and the memory 120 may store original video data, such as original video data from the video source 104 and decoded video data from the video decoder 300. Additionally or alternatively, the memory 106 and the memory 120 may respectively store software instructions that may be executed by the video encoder 200 and the video decoder 300, respectively. Although shown separately from the video encoder 200 and the video decoder 300 in this example, it should be understood that the video encoder 200 and the video decoder 300 may also include internal memory for functionally similar or equivalent purposes. Further, the memory 106 and the memory 120 may store encoded video data that is output from the video encoder 200 and input to the video decoder 300, etc. In some examples, portions of the memory 106 and the memory 120 may be allocated as one or more video buffers, such as to store decoded and/or encoded original video data.

The computer-readable medium 110 may represent any type of medium or device capable of transmitting encoded video data from the source device 102 to the destination device 116. In some examples, the computer-readable medium 110 represents a communication medium to enable the source device 102 to transmit the bitstream directly in real-time to the destination device 116 via a radio frequency network, a computer network, or the like. The output interface 108 may modulate a transmission signal including the encoded video data, and the input interface 122 may modulate a received transmission signal in accordance with a communication standard such as a wireless communication protocol. The communication medium may include a wireless or wired communication medium, or both, for example, a radio frequency (RF) spectrum or one or more physical transmission lines. The communication medium may form part of a packet-based network, such as a local area network, a wide area network, or a global network such as the Internet. The communication medium may include a router, a switch, a base station, or any other device operable to facilitate communication from the source device 102 to the destination device 116.

In some examples, the source device 102 may output encoded data from the output interface 108 to a storage device 112. Similarly, the destination device 116 may access the encoded data from the storage device 112 via the input interface 122. The storage device 112 may include various distributed or locally accessed data storage media, such as a hard disk drive, a Blue-ray disc, a digital video disc (DVD), a compact disc read-only memory (CD-ROM), a flash memory, a volatile or a non-volatile memory, or any other suitable digital storage medium for storing the encoded video data.

In some examples, the source device 102 may output the encoded data to a file server 114 or another intermediate storage device that may store the encoded video generated by the source device 102. The destination device 116 may access the stored video data from the file server 114 via an on-line or download mode. The file server 114 may be any type of server device capable of storing the encoded data and transmitting the encoded data to the destination device 116. The file server 114 may represent a network server (e.g. for a web site), a file transfer protocol (FTP) server, a content distribution network device, or a network attached storage (NAS) device. The destination device 116 may access the encoded data from the file server 114 over any standard data connection, including an Internet connection. This may include a wireless channel such as a Wi-Fi connection, a wired connection such as a digital subscriber line (DSL) and a cable modem, or a combination of a wireless channel and a wired connection suitable for accessing encoded video data stored on the file server 114. The file server 114 and the input interface 122 may be configured to operate according to a streaming protocol, a download transport protocol, or a combination thereof.

The output interface 108 and the input interface 122 may represent wired networking assemblies such as wireless transmitters/receivers, modems, Ethernet cards, wireless communication assemblies operating in accordance with any of the various IEEE 802.11 standards, or other physical assemblies. In examples where the output interface 108 and the input interface 122 include wireless assemblies, the output interface 108 and the input interface 122 may be configured to communicate data, such as encoded data, in accordance with a fourth generation mobile communication technology (4G), a 4G long term evolution (4G-LTE), an advanced LTE (LTE Advanced), a fifth generation mobile communication technology (5G), or other cellular communication standards. In some examples where output interface 108 includes a wireless transmitter, the output interface 108 and the input interface 122 may be configured to communicate data, such as encoded data, in accordance with other wireless standards, such as the IEEE 802.11 specification, the IEEE 802.15 specification (e.g. ZigBee™), the Bluetooth standard, etc. In some examples, the source device 102 and/or the destination device 116 may include corresponding system-on-chip (SoC) devices. For example, the source device 102 may include an SoC device to perform functions of the video encoder 200 and/or the output interface 108, and the destination device 116 may include an SoC device to perform functions such as the video decoder 300 and/or the input interface 122.

The techniques of the present disclosure may be applied to support video encoding to a variety of multimedia applications, such as wireless television broadcast, cable television transmission, satellite television transmission, Internet streaming video transmission such as HTTP-based dynamic adaptive streaming, digital video encoded onto a data storage medium, decoding of digital video stored on a data storage medium, or other applications.

The input interface 122 of the destination device 116 receives the bitstream from the computer-readable medium 110, such as the storage device 112 and the file server 114. The bitstream may include signaling information defined by the video encoder 200, and the signaling information is also used by the video decoder 300, such as syntax elements that have values to describe the character and/or processing of video blocks or other coding units (e.g. slices, pictures, groups of pictures, sequences, etc.).

The display device 118 displays a decoded picture of the decoded video data to a user. The display device 118 may be various types of display devices, such as a cathode-ray tube(CRT)-based device, a liquid crystal display (LCD), a plasma display, an organic light emitting diode (OLED) display, or other types of display devices, etc.

Although not shown in Fig. 2, in some examples, the video encoder 200 and the video decoder 300 may be respectively integrated with an audio encoder and/or audio decoder, and may include appropriate multiplex and de-multiplex (MUX-DEMUX) units or other hardware and/or software to handle multiplexed streams including both audio and video in a common data stream. If applicable, the MUX-DEMUX unit may conform to the ITU H. 223 multiplexer protocol or other protocols such as the user datagram protocol (UDP).

Both the video encoder 200 and the video decoder 300 may be implemented as any suitable codec circuit, such as a microprocessor, a digital signal processor (DSP), an application specific integrated circuit (ASIC), a field programmable gate array (FPGA), discrete logic elements, a software, a hardware, a firmware, or any combination thereof. When the techniques are implemented in part in software, the device may store instructions for the software in a suitable non-transitory computer-readable medium and execute the instructions in hardware using one or more of the above processors to perform the techniques of the disclosure. Both the video encoder 200 and the video decoder 300 may be included in one or more encoders or decoders, either of which may be integrated as part of a combined encoder/decoder (CODEC) in a corresponding device. The device including video encoder 200 and/or video decoder 300 may be an integrated circuit, a microprocessor, and/or a wireless communication device such as a cellular telephone.

The video encoder 200 and video decoder 300 may be operated according to a video coding standard, for example, may be operated according to a video coding standard such as ITU-T H. 265 (also known as high efficiency video coding (HEVC)), or according to an extension of HEVC such as multi-view and/or scalable video coding extensions. Alternatively, the video encoder 200 and the video decoder 300 may be operated according to other proprietary or industry standards, such as the Joint Exploratory Test Model (JEM) or the Versatile Video Coding (VVC) standards currently being developed. The techniques referred to in the present disclosure are not limited to any particular coding standard.

In general, the video encoder 200 and the video decoder 300 may code video data represented in a YUV (e.g. Y, Cb, Cr) format. That is, the video encoder 200 and the video decoder 300 may encode luma components and chroma components instead of encoding red, green, and blue (RGB) data of a picture sample, where the chroma components may include chroma components of a red tone and a blue tone,. In some examples, the video encoder 200 converts the received RGB formatted data to a YUV format before encoding, and video decoder 300 converts the YUV format to an RGB format. Optionally, a pre-processing unit and a post-processing unit (not shown) may perform these conversions.

In general, the video encoder 200 and the video decoder 300 may perform a block-based coding process for pictures. The term "block" or "video block" generally refers to a structure that includes data to be processed (e.g. encoded data, decoded fata , or otherwise data used in the encoding and/or decoding process). For example, the block may include a two-dimensional matrix of luma and/or chroma data samples. In general, a picture may first be partitioned into a plurality of blocks for coding processing, and the block undergoing coding processing in the picture may be referred to as a "current block" or a "current video block".

In addition, embodiments of the present disclosure may also relate to coding pictures to include processes of encoding or decoding picture data. Similarly, the present disclosure may relate to encoding a block of a picture to include a process of encoding or decoding data of the block, such as prediction and/or residual encoding. The bitstream obtained by the encoding process typically includes a series of values used for syntax elements, and the syntax elements represent the encoding decision (e.g. encoding mode) and the information of partitioning the picture into blocks. Thus, encoding a picture or block can generally be understood as encoding the values of the syntax elements that form the picture or block.

HEVC defines various blocks, including a coding unit (CU), a prediction unit (PU), and a transform unit (TU). According to the HEVC, a video encoder (such as the video encoder 200) partitions a coding tree unit CTU into CUs according to a quadtree structure. That is, the video encoder partitions the CTU and the CU into four equal non-overlapping blocks, and each node of the quadtree has zero or four sub-nodes. Nodes without sub-nodes may be referred to as "leaf nodes", and CUs of such leaf nodes may include one or more PUs and/or one or more TUs. The video encoder may further partition the PU and the TU. For example, in the HEVC, the residual quadtree (RQT) represents the partitioning of the TU.

In the HEVC, PU represents inter-prediction data, and TU represents residual data. The intra-predicted CU includes intra-prediction information such as an intra-mode indication.

In VVC, a quadtree with nested multi-type trees (using binary and ternary tree partitioning) replaces the concept of multiple partition unit types, i.e. it removes the separation of the CU, PU, and TU concepts, unless oversized CUs are needed for maximum transform length, and supports greater flexibility of CU partition shapes. In the encoding tree structure, the CUs may have a square or rectangular shape. First, the CTU is partitioned by a quadtree structure. The quadtree leaf nodes may then be further partitioned by a multi-type tree structure. The multi-type leaf nodes are called coding units CU, and unless the CU is too large for the maximum transform length, the partition is used for prediction and transform processing without any further partitioning. This means that in most cases the CUs, PUs and TUs have the same block size in a quadtree with a nested multi-type tree encoding block structure.

The video encoder 200 and the video decoder 300 may be configured to use quadtree partitioning according to HEVC, and perform the quadtree binary tree (QTBT) partitioning according to JEM, or to use other partitioning structures. It should be known that the techniques of the present disclosure may also be applied to video encoders configured to use quadtree partitioning or other partitioning types. The video encoder 200 encodes video data for CUs representing the prediction information and/or the residual information and other information. The prediction information indicates how to predict the CU to form a prediction block for the CU. The residual information generally represents a sample-by-sample difference between the sample of the CU before encoding and the prediction block sample.

The video encoder 200 may further generate, e.g. in a picture header, a block header, a slice header etc., syntax data that is used for the video decoder 300, such as block-based syntax data, picture-based syntax data and sequence-based syntax data, or generate other syntax data such as a sequence parameter set (SPS), a picture parameter set (PPS), or a video parameter set (VPS). The video decoder 300 may likewise decode such syntax data to determine how to decode the corresponding video data. For example, the syntax data may include various syntax elements, flags, parameters, etc. for representing the coding information of the video.

In this manner, the video encoder 200 may generate a bitstream that includes encoded video data, such as prediction information and/or residual information describing syntax elements and blocks that partition a picture into blocks, such as CUs. Finally, the video decoder 300 may receive the bitstream and decode the encoded video data.

In general, the video decoder 300 performs a process that is reciprocal to the process performed by the video encoder 200 to decode the encoded video data in the bitstream. For example, the video decoder 300 may decode the values of the syntax elements of the bitstream in a manner substantially similar to the video encoder 200. The syntax element may define a picture CTU according to the partitioning information, and partition each CTU according to a corresponding partitioning structure, such as a QTBT structure, to define a CU of the CTU. The syntax element may further define the prediction information and the residual information for a block of video data, such as a CU. The residual information may be represented by, for example, quantized transform coefficients. The video decoder 300 may inverse quantize and inverse transform the quantized transform coefficients of the block to reproduce the residual block of the block. The video decoder 300 uses a prediction mode (intra-prediction or inter-prediction) signaled in the bitstream and associated prediction information (e.g. motion information for inter-prediction) to form a prediction block of blocks. The video decoder 300 may then combine the prediction block and the residual block (on a sample-by-sample basis) to reproduce the original block. In addition, the video decoder 300 may also perform additional processing, such as performing a deblocking process to reduce visual artifacts along block boundaries.

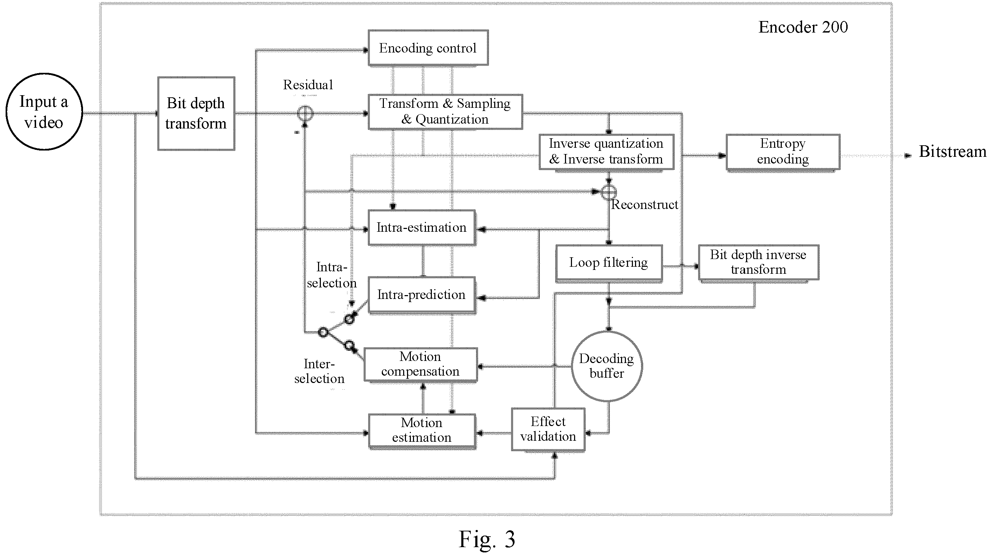

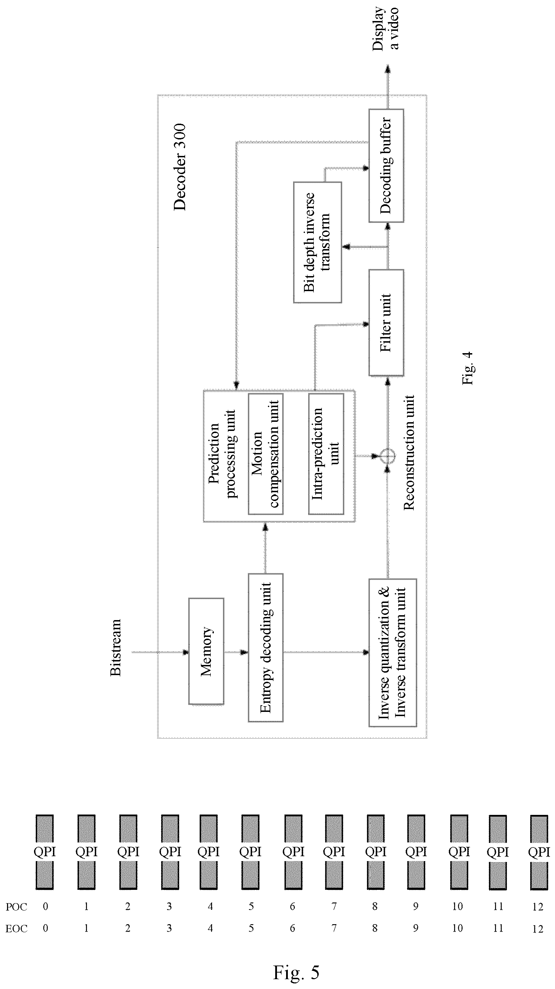

Fig. 3 is a block diagram illustrating an exemplary video encoder according to some embodiments of the present disclosure, and correspondingly, Fig. 4 is a block diagram illustrating an exemplary video decoder according to some embodiments of the present disclosure. For example, the encoder illustrated in Fig. 3 may be implemented as the video encoder 200 in Fig. 2 and the decoder illustrated in Fig. 4 may be implemented as the video decoder 300 in Fig. 2. The following will provide a detailed description of the codec according to some embodiments of the present disclosure, in conjunction with Fig. 3 and Fig. 4.

It is to be understood that Fig. 3 and Fig. 4 are provided for purposes of explanation and should not be construed as limiting the techniques broadly illustrated and described in the present disclosure. For purposes of explanation, the present disclosure describes the video encoder 200 and the video decoder 300 in the context of a developing video coding standard ( such as the HEVC video coding standard or the H. 266 video coding standard), and the techniques of the present disclosure are not limited to these video coding standards.

The units (or modules) in Fig. 3 are shown to help to understand the operations performed by the video encoder 200. These units may be implemented as fixed function circuits, programmable circuits, or a combination of both. The fixed-function circuit refers to a circuit that provides a specific function and is previously set on an executable operation. Programmable circuitry refers to circuitry that can be programmed to perform a variety of tasks and provide flexible functionality in executable operations. For example, a programmable circuit may execute software or firmware that causes the programmable circuit to operate in a manner defined by instructions of the software or firmware. Fixed function circuits may execute software instructions (to receive parameters or output parameters, etc.), but the type of operation performed by fixed function circuits is typically fixed. In some examples, one or more of the units may be different circuit blocks (fixed function circuit blocks or programmable circuit blocks), and in some examples, one or more of the units may be integrated circuits.

The video encoder 200 shown in Fig. 3 may include an arithmetic logic unit (ALU), a basic function unit (EFU), a digital circuit, an analog circuit and/or a programmable core formed of programmable circuits. In an example where the operation of the video encoder 200 is performed by using software executed by programmable circuitry, the memory 106 (Fig. 2) may store object code for the software received and executed by video encoder 200, or other memory (not shown in the figures) within video encoder 200 for storing such instructions.

In the example of Fig. 3, the video encoder 200 may receive the input video, for example, from a video data memory, or may receive input video directly from a video capture device. The video data memory may store video data to be encoded by assembly of the video encoder 200. The video encoder 200 may receive the video data stored in a video data memory from a source such as the video source 104 (shown in Fig. 2). The decoding buffer may be used as a reference picture memory to store reference video data for use by video encoder 200 in predicting subsequent video data. The video data memory and decoding buffer may be formed of a variety of memory devices, such as dynamic random access memory (DRAM) including synchronous DRAM (SDRAM), magnetoresistive RAM (MRAM), resistive RAM (RRAM), or other types of memory devices. The video data memory and the decoding buffer may be provided by the same storage device or by different storage devices. In various examples, the video data memory may or may not be on the same chip as other assemblies of the video encoder 200 as shown in Fig. 3.

In the present disclosure, references to video data memory should not be explained as limited to the memory inside the video encoder 200 (unless specifically described as such) or to memory outside the video encoder 200 (unless specifically described as such). More specifically, reference to the video data memory should be understood as a reference memory that stores video data received by the video encoder 200 for encoding, such as video data of the current block to be encoded. In addition, the memory 106 in Fig. 2 may further provide temporary storage for the output of the units in the video encoder 200.

The mode selection unit typically coordinates a plurality of encoding channels to test combinations of encoding parameters and the rate distortion values obtained from these combinations. The encoding parameters may include the partitioning from the CTU to CUs, the prediction mode of the CUs, the transform type of the residual data of the CUs, the quantization parameters of the residual data of the CUs, etc. The mode selection unit may finally select a combination of encoding parameters having a better rate distortion value than the other tested combinations.

The video encoder 200 may partition a picture searched from the video memory into a series of CTUs and encapsulate one or more CTUs into a slice. The mode selection unit may partition the CTU of the picture according to a tree structure (such as the QTBT structure or the quadtree structure of HEVC described above). As described above, the video encoder 200 may form one or more CUs by partitioning the CTU according to the tree structure. Such CUs may also be commonly referred to as "blocks" or "video blocks".

In general, the mode selection unit further controls its assemblies (such as a motion estimation unit, a motion compensation unit, and an intra-prediction unit) to generate a prediction block of a current block (such as an overlapping portion of a PU and a TU in a current CU or HEVC). For inter-prediction of the current block, the motion estimation unit may perform a motion search to identify one or more closely matched reference blocks in one or more reference pictures, such as one or more decoded pictures stored in the decoding buffer. In particular, the motion estimation unit may, according to a sum of absolute differences (SAD), a sum of squared differences (SSD), an average absolute difference (MAD), an average squared difference (MSD), etc., calculate a value representing how similar a potential reference block is to the current block, and the motion estimation unit may perform the calculation by using the sample-by-sample difference between the current block and the considered reference block. The motion estimation unit may identify the reference block having a lowest value obtained from these calculations, thereby indicating the reference block that most closely matches the current block.

The motion estimation unit may form one or more motion vectors (MVs). The motion vectors define the position of the reference block in the reference picture relative to the position of the current block in the current picture. The motion estimation unit may then provide the motion vectors to the motion compensation unit. For example, for uni-directional inter-prediction, the motion estimation unit may provide a single motion vector, while for bi-directional inter-prediction, the motion estimation unit may provide two motion vectors. The motion compensation unit may then generate a prediction block using the motion vector. For example, the motion compensation unit may use the motion vectors to search the data of the reference block. As another example, if the motion vector has fractional sample precision, the motion compensation unit may interpolate the prediction block according to one or more interpolation filters. Further, for bi-directional inter-prediction, the motion compensation unit may search data of two reference blocks identified by corresponding motion vectors, and combine the searched data by a sample-by-sample average or a weighted average, etc.

As another example, for intra-prediction, the intra-prediction unit may generate a prediction block from samples adjacent to the current block. For example, for a directional mode, the intra-prediction unit may typically mathematically combine the values of adjacent samples and pad these calculated values along a defined direction on the current block to produce a prediction block. As another example, for a DC mode, the intra-prediction unit may calculate an average value of samples adjacent to the current block and generate the prediction block to include the obtained average value of each sample of the prediction block.

For other video coding techniques such as intra-block copy mode encoding, affine mode encoding, and linear model (LM) mode encoding, for example, the mode selection unit may generate a prediction block for the current block being encoded via a corresponding unit associated with the coding technique. In some examples, such as palette mode encoding, the mode selection unit may not generate the prediction block, but a syntax element indicating a manner in which the block is reconstructed from the selected palette. In such a mode, the mode selection unit may provide these syntax elements to the entropy encoding unit for encoding.

As described above, the residual unit receives the current block and the corresponding prediction block. The residual unit then generates a residual block of the current block. To generate the residual block, the residual unit calculates a sample-by-sample difference between the prediction block and the current block.

The transform unit ("transform & sampling & quantization" shown in Fig. 3) applies one or more transforms to the residual block to generate a block of a transform coefficient (e.g. referred to as a "transform coefficient block"). The transform unit may apply various transforms to the residual block to form a transform coefficient block. For example, the transform unit may apply a discrete cosine transform (DCT), a directional transform, a KLT transform, or a conceptually similar transform to the residual block. In some examples, the transform unit may perform multiple transforms on the residual block, e.g. a primary transform and a secondary transform, such as a rotational transform. In some examples, the transform unit may not apply the transform to the residual block.

The transform unit may then quantize the transform coefficients in the transform coefficient block to produce a quantized transform coefficient block. The transform unit may quantize the transform coefficients of the transform coefficient block according to a quantization parameter (QP) value associated with the current block. The video encoder 200 (e.g. via a mode selection unit) may adjust the degree of quantization applied to the coefficient block associated with the current block by adjusting the QP value associated with the CU. The quantization may result in loss of information, so the quantized transform coefficients may be less accurate than the original transform coefficients.

In addition, the encoder 200 may further include an encoding control unit for generating control information for operations in the encoding process. Next, an inverse quantization and inverse transform unit ("inverse quantization & inverse transform" shown in Fig. 3) may apply the inverse quantization and inverse transform, respectively, to the quantized transform coefficient block to obtain a reconstructed residue block from the transform coefficient block. The reconstruction unit may generate a reconstructed block corresponding to the current block based on the reconstructed residual block and the prediction block generated by the mode selection unit (although there may be some degree of distortion). For example, the reconstruction unit may add samples of the reconstructed residual block to corresponding samples from the prediction block generated by the mode selection unit to generate the reconstructed block.

The reconstructed block may be performed a filtering process, such as the loop filtering unit shown in Fig. 3, to perform one or more filtering operations. For example, the filtering process may include a deblocking operation to reduce blocking artifacts along CU edges. In some examples, the operation of the filtering process may be skipped.

Next, for example, after the loop filtering, the video encoder 200 may then store the reconstructed block in the decoding buffer after. In an example of skipping the filtering process, the reconstruction unit may store the reconstructed block in the decoding buffer. In an example where filtering is required, the filtered reconstructed block may be stored in the decoding buffer. The motion estimation unit and the motion compensation unit may search the reference picture formed by the reconstructed (and possibly filtered) block from the decoding buffer, to perform inter-prediction on the block of the subsequently encoded picture. Further, the intra-prediction unit may perform intra-prediction on other blocks in the current picture by using the reconstructed blocks in the decoding buffer of the current picture.

The operations described above are with respect to blocks. The description should be understood as an operation for luma encoded blocks and/or chroma encoded blocks. As described above, in some examples, the luma and chroma encoded blocks are the luma and chroma components of the CU. In some examples, the luma and chroma coded blocks are luma and chroma components of the PU.

In general, the entropy encoding unit may entropy encode syntax elements received from other functional assemblies of the video encoder 200. For example, the entropy encoding unit may entropy encode the quantized transform coefficient block from the transform unit. For example, the entropy encoding unit may entropy encode a prediction syntax element from the mode selection unit, such as motion information of inter-prediction or intra-mode information of intra-prediction, to generate entropy encoded data. For example, the entropy encoding unit may perform a context adaptive variable length encoding (CAVLC) operation, a context adaptive binary arithmetic encoding (CABAC) operation, a variable length encoding operation, a syntax based context adaptive binary arithmetic encoding (SBAC) operation, a probability interval partition entropy (PIPE) encoding operation, an exponential Columbus encoding operation, or other type of entropy encoding operation on the data. In some examples, the entropy encoding unit may operate in a bypass mode where syntax elements are not entropy encoded. The video encoder 200 may output a bitstream that includes entropy encoding syntax elements needed to reconstruct a slice or a block of a picture.

Fig. 4 is a block diagram illustrating an exemplary video decoder according to some embodiments of the present disclosure. For example, the decoder illustrated in Fig. 4 may be the video decoder 300 in Fig. 2. It may be understood that Fig. 4 is provided for explanation, instead of limitation of the techniques broadly illustrated and described in the present disclosure. For purposes of the explanation, the video decoder 300 is described in terms of the HEVC technique. However, the techniques of the present disclosure may be performed by a video decoding device configured with other video coding standards.

It will be understood that in practice the basic structure of the video decoder 300 may be similar to the video encoder shown in Fig. 3, such that both the encoder 200 and the decoder 300 include video encoding and decoding assemblies, i.e. both the encoder 200 and the decoder 300 may implement video encoding and decoding processes. In this case, the encoder 200 and the decoder 300 may be collectively referred to as a codec. Thus, a system comprised of the encoder 200 and the decoder 300 may support uni-directional or bi-directional video transmission between devices, such as may be used for video streaming, video playback, video broadcasting, or video telephony communications. It will be understood that the video decoder 300 may include more, fewer, or different functional assemblies than those shown in Fig. 4. For purposes of explanation, assemblies associated with a decoding conversion process according to some embodiments of the present disclosure are shown in Fig. 4.

In the example of Fig. 4, the video decoder 300 includes a memory, an entropy decoding unit, a prediction processing unit, an inverse quantization and inverse transform unit ("inverse quantization & inverse transform unit" shown in Fig. 4), a reconstruction unit, a filter unit, a decoding buffer, and a bit depth inverse transform unit. Here, the prediction processing unit may include a motion compensation unit and an intra-prediction unit. The prediction processing unit may, for example, further include an addition unit to perform prediction according to other prediction modes. By way of example, the prediction processing unit may include a palette unit, an intra-block copy unit (which may form a part of the motion compensation unit), an affine unit, a linear model (LM) unit, etc. In other examples, the video decoder 300 may include more, fewer, or different functional assemblies.

As shown in Fig. 4, first, the decoder 300 may receive a bitstream including encoded video data. For example, the memory in Fig. 4 may be referred to as a coding picture buffer (CPB) to store a bitstream including the encoded video data that is configured for waiting to be decoded by assemblies of the video decoder 300. The video data stored in the CPB may be obtained, for example, from the computer-readable medium 110 (Fig. 2) or the like. In addition, the CPB may also store temporary data such as the output of various units of the video decoder 300. The decoding buffer typically stores decoded pictures that the video decoder 300 can output and/or use as reference video data when subsequent data or pictures of the bitstream are decoded. The CPB memory and decoding buffer may be formed of a variety of memory devices, such as dynamic random access memory (DRAM) including synchronous DRAM (SDRAM), magnetoresistive RAM (MRAM), resistive RAM (RRAM), or other types of memory devices. The CPB memory and the decoding buffer may be provided by the same storage device or by different storage devices. In various examples, the CPB memory may or may not be on the same chip as other assemblies of the video decoder 300, as shown.

The various units shown in Fig. 4 are shown to aid in understanding the operations performed by the video decoder 300. These units may be implemented as fixed function circuits, programmable circuits, or a combination of both. Like Fig. 3, the fixed-function circuit refers to a circuit that provides a specific function and is previously provided on an executable operation. Programmable circuitry refers to circuitry that can be programmed to perform a variety of tasks and provide flexible functionality in executable operations. For example, a programmable circuit may execute software or firmware that causes the programmable circuit to operate in a manner defined by instructions of the software or firmware. Fixed function circuits may execute software instructions (to receive parameters or output parameters, etc.), but the type of operation performed by fixed function circuits is typically fixed. In some examples, one or more of the units may be different circuit blocks (fixed function circuit blocks or programmable circuit blocks), and in some examples, one or more of the units may be integrated circuits.

The video decoder 300 may include an ALU, an EFU, a digital circuit, an analog circuit, and/or a programmable core formed of programmable circuits. In an example where the operation of the video decoder 300 is performed by a software executed on programmable circuitry, an on-chip or off-chip memory may store instructions (e.g. object code) for the software received and executed by video decoder 300.

The entropy decoding unit may then entropy decode the received bitstream to parse therefrom the encoding information corresponding to the picture.

Then, the decoder 300 may perform a decoding conversion process for generating display video data according to the parsed encoding information. According to some embodiments of the present disclosure, operations executable by decoder 300 at the decoding end may refer to a decoding conversion process as shown in Fig. 4, which may be understood to include a general decoding process to generate a display picture for display by a display device.

In the decoder 300 shown in Fig. 4, the entropy decoding unit may receive a bitstream including encoded video from, for example, the memory 120, and entropy decode the bitstream to reproduce syntax elements. The inverse quantization and inverse transform unit ("inverse quantization & inverse transform" shown in Fig. 4), the reconstruction unit, and the filter unit may generate decoded video based on the syntax elements extracted from the bitstream, e.g. generate decoded pictures.

In general, the video decoder 300 reconstructs pictures block-by-block. The video decoder 400 may perform the reconstruction operation separately for each block, where the block currently being reconstructed (i.e. decoded) may be referred to as the "current block".

In particular, the entropy decoding unit may entropy decode the syntax elements of the quantized transform coefficients of the quantized transform coefficient block and the transform information such as a quantization parameter (QP) and/or a transform mode indication. The inverse quantization and inverse transform unit may use the QP associated with the quantized transform coefficient block to determine a degree of quantization, and likewise may determine the degree of inverse quantization to apply. For example, the inverse quantization and inverse transform unit may perform a bitwise left shift operation to inverse quantize the quantized transform coefficients. The inverse quantization and inverse transform unit may thus form a transform coefficient block including transform coefficients. After forming the transform coefficient block, the inverse quantization and inverse transform unit may apply one or more inverse transforms to the transform coefficient block to generate a residual block associated with the current block. For example, the inverse quantization and inverse transform unit may apply an inverse DCT, inverse integer transform, inverse KLT, inverse rotation transform, inverse direction transform, or other inverse transforms to the coefficient block.

Further, the prediction processing unit generates a prediction block based on the prediction information syntax element of the entropy decoding unit performing entropy decoding. For example, if the prediction information syntax element indicates that the current block is inter-predicted, the motion compensation unit may generate a prediction block. In this case, the prediction information syntax element may indicate a reference picture in the decoding buffer from which the reference block is searched, and indicate a motion vector identifying the position of the reference block in the reference picture relative to the current block in the current picture. The motion compensation unit may generally perform the inter-prediction process in a manner substantially similar to that described with respect to the motion compensation unit in Fig. 3.

As another example, if the prediction information syntax elements indicate to perform intra-prediction on the current block, the intra-prediction unit may generate the prediction block according to the intra-prediction mode indicated by the prediction information syntax elements. Also, the intra-prediction unit may generally perform the intra-prediction process in a manner substantially similar to that described with respect to the intra-prediction unit in Fig. 3. The intra-prediction unit may search data of neighboring samples of the current block from the decoding buffer.

The reconstruction unit may reconstruct the current block by using the prediction block and the residual block. For example, the reconstruction unit may add samples of the residual block to the corresponding samples of the prediction block to reconstruct the current block.

The filter unit may then perform one or more filter operations on the reconstructed block. For example, the filter unit may perform a deblocking operation to reduce blocking artifacts along an edge of the reconstructed block. It will be understood that the filtering operation does not need to be performed in all examples, i.e., the filtering operation may be skipped in some cases.

The video decoder 300 may store the reconstructed blocks in the decoding buffer. As described above, the decoding buffer may provide reference information, such as the samples of a current picture used for intra-prediction and the samples of a previously decoded picture used for subsequent motion compensation, to a motion compensation and motion estimation unit. Further, the video decoder 300 may output decoded pictures from the decoding buffer so that the decoded pictures are presented subsequently on a display device, such as the display device 118 of Fig. 2.

Fig. 5 is a schematic diagram of an encoding structure for all intra (AI) configuration provided by at least one embodiment of the present disclosure.

For example, as shown in Fig. 5, in an all intra (AI) configuration, all frames in the video are encoded as I-frames during the encoding process, i.e., the coding process is completely independent, and there is no dependency on other frames. At the same time, the quantization parameter (QP) of the encoding process does not fluctuate with the encoding position and is equal to a QP value (QPI) of a first frame. As shown in Fig. 5, in the all intra (AI) configuration, a playing order and an encoding order of all frames in the video are the same, i.e., a playing order count (POC) and an encoding order count (EOC) of the video frames are the same.

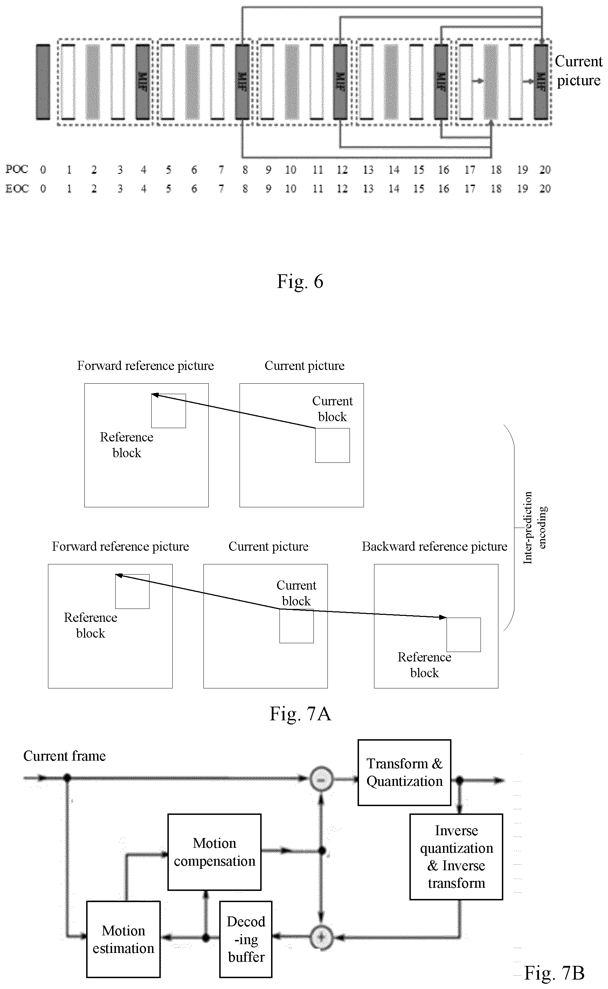

Fig. 6 is a schematic diagram of an encoding structure for low delay (LD) configuration provided by at least one embodiment of the present disclosure.

Generally, in practical applications, low-delay (LD) configurations are primarily suitable for real-time communication environments with low delay requirements. As shown in Fig. 6, in the LD configuration, generalized P/B frame prediction is used for all P frames or B frames, and the EOC of all frames is still consistent with POC. A "1+x" scheme is proposed for low delay configurations, where "1" is a nearest neighboring reference frame and "x" is x high quality reference frames.

Fig. 7A is a schematic diagram of an inter-prediction encoding provided by at least one embodiment of the present disclosure. Fig. 7B is a schematic flow diagram of an inter-prediction technology provided by at least one embodiment of the present disclosure.

The main idea of video prediction encoding is to eliminate correlation between pixels by prediction. According to different position of the reference pixel, video prediction encoding techniques are mainly classified into two categories: (1) intra-prediction, i.e., generating a predictor by using encoded pixels in a current picture (a current video frame); (2) inter-prediction, i.e., generating a predictor by using reconstructed pixels of a previously encoded picture of the current picture (the current video frame). The inter-prediction encoding refers to using a temporal correlation of a video, and using pixels of the neighboring encoded picture to predict the pixels of the current picture, so as to effectively remove redundancy of the video time domain. As shown in Figs. 7A and 7B, the inter-prediction encoding algorithm in the HEVC/H265 standard obtains the motion information of each block of the current picture in the reference picture by using the encoded picture as the reference picture of the current picture, and the motion information is generally represented by the motion vector and a reference frame index. The reference picture may be forward, backward or bi-directional. When the information of the current block is obtained by using the inter encoding technique, the motion information can be inherited directly from the adjacent block or the corresponding motion information can be obtained by searching for the matched block in the reference picture through motion estimation. The predictor of the current block is then obtained through a motion compensation process.

Each pixel block of the current picture finds a best matched block in the previously encoded picture, and the process is called motion estimation. A picture used for prediction is referred to as a reference picture, a displacement from the reference block to the current block (i.e., a current pixel block) is referred to as the motion vector, and a difference between the current block and the reference block is referred to as a prediction residual.

Three types of pictures are defined in the video coding standard: I-frame pictures, P-frame pictures and B-frame pictures. The I-frame pictures can only use intra-encoding, the P-frame pictures and the B-frame pictures can use inter-prediction encoding. The prediction manner of the P-frame picture is to predict a current picture from a previous frame picture, the manner is called "forward prediction". That is, the matched block (reference block) of the current block is found in forward reference pictures. B-frame pictures can use three prediction manners: forward prediction, backward prediction, and bi-directional prediction.

The inter-prediction encoding relies on inter-frame correlation, and includes processes such as motion estimation, motion compensation, etc. For example, in some examples, the main process of inter-prediction includes the following steps.

Step 1: creating a motion vector (MV) candidate list, performing Lagrange rate distortion optimization (RDO) calculation, and selecting an MV with a minimum distortion as an initial MV.

Step 2: in the step 1, finding a point with a minimum matching error as a starting point of a next search.

Step 3: a step size starting from 1 and increasing exponentially by 2, performing an 8-point diamond search. In this step, a maximum quantity of searches (traversing once with a certain step size is counted as one time) can be set.

Step 4: in response to an optimal step size obtained by searching in the step 3 being 1, then requiring a two-point diamond search with the optimal point as a starting point. Because when the previous 8-point search is performed, two of the 8 neighboring points of the optimal point will not be searched.

Step 5: in response to the optimal step size obtained by searching in step 3 being greater than a certain threshold value (iRaster), then taking the point obtained in the step 2 as the starting point, performing raster scanning (i.e., traversing all points in a range of motion search) with a step size of iRaster.

Step 6: after the previous steps 1-5, taking the obtained optimal point as the starting point, and repeating the steps 3 and 4 again.

Step 7: saving the MV corresponding to the best matching point as a final MV and a sum of absolute differences (SAD).

In the video coding standard H. 265/HEVC, the inter-prediction techniques mainly include Merge and advanced motion vector prediction AMVP techniques which use the idea of temporal and spatial motion video prediction. The core idea of the two techniques is to build one candidate motion vector prediction MV list and select one MV with a best performance as the prediction MV of the current encoding block. For example, in the Merge mode, an MV candidate list is built for the current prediction unit (PU), and there are five candidate MVs (and their corresponding reference pictures) in the list. By traversing the five candidate MVs and calculating their rate distortion cost, the candidate MV with a smallest rate distortion cost is finally selected as the optimal MV of the Merge mode. If the encoding/decoding end builds the candidate list in the same way, the encoder only needs to transmit the index of the optimal MV in the candidate list, which significantly saves the encoding bits of the motion information.

The video coding standard VVC follows the motion vector prediction technique in HEVC, but some optimizations are made. For example, a length of the Merge motion vector candidate list is extended, a construction process of the candidate list is modified, etc., some new prediction techniques are also added, such as affine transform techniques, adaptive motion vector precision techniques, etc.

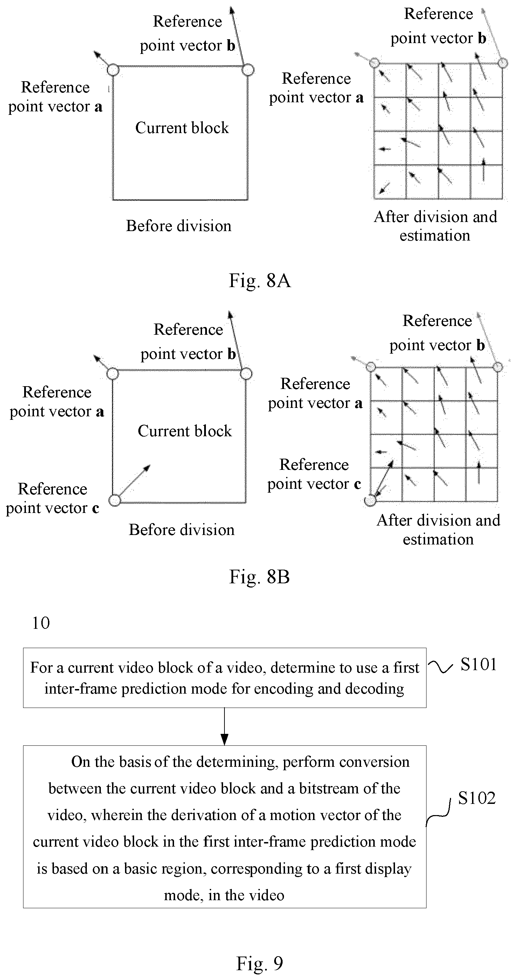

Fig. 8A and Fig. 8B show schematic diagrams of an affine motion compensation provided by at least one embodiment of the present disclosure. Fig. 8A shows an affine transform of 2 control points, i.e., the affine motion vector of the current block is generated by 2 control points (4 parameters). Fig. 8B shows an affine transform of 3 control points, i.e., the affine motion vector of the current block is generated by 3 control points (6 parameters).

For a 4-parameter affine motion model, a sub-block motion vector with a center pixel (x, y) is calculated as follows.

$$MV_h = (b_h - a_h) / W * x + (b_v - a_v) / w * y + a_h$$

$$MV_v = (b_v - a_v) / W * x + (b_h - a_h) / w * y + a_v$$

The reference point vectors a and b can be respectively expressed as $(a_h, a_v)$ and $(b_h, b_v)$ in the two-dimensional space. A horizontal direction prediction vector of a current center pixel 2-point 4-parameter affine motion model is ($MV_h$, $MV_v$), and can be expressed as follows by using the a and b vectors (it can be likewise known that a vertical direction prediction of the center pixel 2-point 4-parameter affine motion model), where w and h respectively represent a width and a height of the current block.

In response to using three control points a, b and c, i.e., a 6-parameter affine motion model, the motion vector of the sub-block with central pixel (x, y) is calculated as follows.

$$MV_h = (b_h - a_h) / W * x + (c_h - a_h) / h * y + a_h$$

$$MV_v = (b_v - a_v) / W * x + (c_v - a_v) / h * y + a_v$$

Compared with the 4-parameter affine motion model, the 6-parameter affine motion model adds a reference point c, and the motion vector is expressed as $(c_h, c_v)$.

Fig. 9 is a schematic diagram of a video data processing method provided by at least one embodiment of the present disclosure.

For example, in at least one embodiment of the present disclosure, a video data processing method 10 is provided. The video data processing method 10 can be applied to various application scenarios related to video coding, for example, can be applied to a terminal such as a mobile phone, a computer, etc., and for example, can be applied to a video website/video platform, etc., and the embodiments of the present disclosure are not particularly limited thereto. For example, as shown in Fig. 9, the video data processing method 10 includes the following operations S101 to S102.

Step S101: for a current video block of a video, determining to use a first inter-prediction mode for coding.

Step S102: performing a conversion between the current video block and a bitstream of the video based on the determining, where in the first inter-prediction mode, a derivation of a motion vector of the current video block is based on a basic area in the video corresponding to a first display mode.

For example, in at least one embodiment of the present disclosure, the video may be a photographed photographic work, a video downloaded from a network, or a locally stored video, etc., as well as an LDR video, an SDR video, etc., and the embodiments of the present disclosure are not limited in any way.

For example, in at least one embodiment of the present disclosure, the first display mode of the video may define that the video frame gradually increases along a certain extension direction (e.g., a horizontal direction or a vertical direction from a certain extension starting position. For example, in some examples, one or more syntax elements associated with the first display mode are present in the bitstream of the video. For example, in some examples, the video frame expands from left to right (i.e., the horizontal direction), and for example, in some examples, the video frame expands from top to bottom (i.e., the vertical direction), and vice versa. For example, in one example, the first display mode of the video defines information such as the size, position, etc. of the basic area. It should be noted that the "first display mode" is not limited to a particular display mode or some display modes, nor to a particular order.

For example, in at least one embodiment of the present disclosure, any inter-prediction mode may be selected for a current video block of the video. For example, in the H. 265/HEVC standard, the current video block may select a Merge mode, an AMVP mode for inter-prediction encoding. For example, for the Merge mode, a motion vector MV candidate list is constructed for the current block, and the candidate list includes 5 candidate MVs. The 5 candidate MVs typically include both spatial and temporal types. Up to four candidate MVs are provided in the spatial domain and up to one candidate MV is provided in the temporal domain. If the quantity of candidate MVs in the current MV candidate list is less than 5, the zero vector (0, 0) needs to be used for padding to reach a specified quantity. Similar to the Merge mode, the MV candidate list constructed in the AMVP mode also contains both spatial and temporal cases, except that the length of the AMVP list is only 2.

The H.266/VVC standard extends a size of the candidate list for the Merge mode, and there can be up to 6 candidate MVs. The VVC standard further introduces new inter-prediction techniques such as the affine prediction mode, the combined intra-inter prediction (CIIP) modes, the geometric partition prediction mode (TPM), the bi-directional optical flow (BIO) method, the bi-directional weighted prediction (BCW), the merge mode with a motion vector difference, etc. In an embodiment of the present disclosure, the available inter-prediction mode for the current video block may include any one of the inter-prediction modes described above, and the embodiments of the present disclosure are not limited thereto.

For example, in at least one embodiment of the present disclosure, in order to achieve better compression performance while maintaining picture quality, the rate distortion optimization (RDO) is used to select an optimum inter-prediction mode and an optimum motion vector. For example, in an embodiment of the present disclosure, "first inter-prediction mode" is used to indicate an inter-prediction mode for the current video block. It should be noted that the "first inter-prediction mode" is not limited to a specific inter-prediction mode or some inter-prediction modes, nor to a specific order.

For example, in at least one embodiment of the present disclosure, the first inter-prediction mode may be any of the inter-prediction modes available described above, such as the Merge mode, the advanced motion vector prediction AMVP mode, the Merge mode with a motion vector difference, a bi-directional weighted prediction mode, or an affine prediction mode, etc., to which embodiments of the present disclosure are not limited.

For example, in at least one embodiment of the present disclosure, for the step S102, the conversion between the current video block and the bitstream may include encoding the current video block into the bitstream, and may also include decoding the current video block from the bitstream. For example, the conversion process may include an encoding process as well as a decoding process, and embodiments of the present disclosure are not limited in this respect.

For example, in at least one embodiment of the present disclosure, in the first inter-prediction mode, a derivation of a motion vector of the current video block is based on a basic area in the video corresponding to a first display mode. For example, in some examples, the motion vector of the current video block is related to the position and/or size of the basic area. For example, in some examples, the reference pixels used by the current video block are limited to a particular area. In this way, by limiting the inter-prediction mode of the current video block to only use the reference pixels within a valid area, the bitstream of the video can be partially decoded according to the display area that is actually displayed, thereby reducing the consumption of decoding resources of the non-displayed part, effectively improving the efficiency of video coding, and further improving the user's use experience on the product.

For example, in an embodiment of the present disclosure, a basic area refers to an area in a video that is always displayed, and may be determined by the first display mode of the video. For example, in an embodiment of the present disclosure, a fixed area having a certain length along the extension direction from a video extension starting position defined by the first display mode is used as a basic area (also referred to herein as the first display area). For example, the position of the basic area may vary depending on the first display mode of the video. For example, in the example shown in Fig. 1, the first display mode of the video defines that the video frame gradually increases from left to right from the leftmost dashed line. In this case, the fixed area is an area extending a certain length from left to right starting from a leftmost side of the video frame. For example, in some examples, the first display mode of the video defines that the video frame starts from a topmost position and gradually increases in a direction from top to bottom. In this case, the fixed area is an area extending a certain length from top to bottom starting from the topmost position of the video frame. For example, in some examples, a length ratio of the basic area to the entire display area is 1:1. For another example, in some examples, a length ratio of the basic area to the entire display area is 1:2. The embodiment of the present disclosure does not limit the position/size of the basic area, and may be set according to actual situations.

For example, in at least one embodiment of the present disclosure, the application of the first display mode, the extension direction of the video, the size of the basic area, etc. may be defined by one or more syntax elements associated with the first display mode, which are not limited by the embodiments of the present disclosure and may be set according to actual situations.

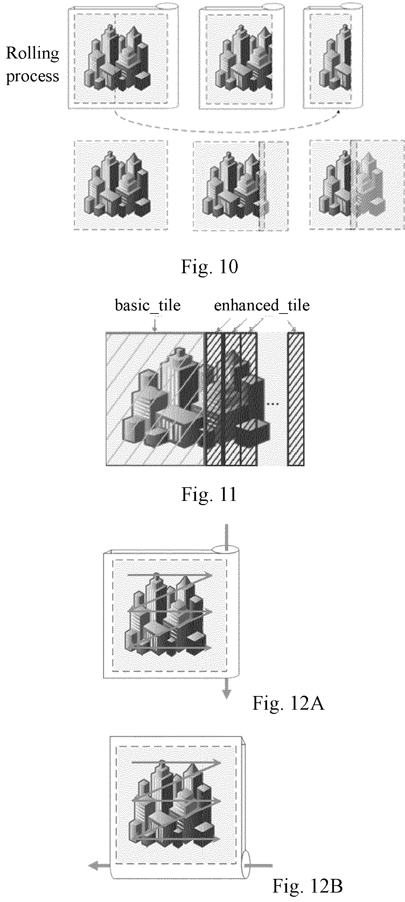

Fig. 10 is a schematic diagram of a video coding for a scroll screen provided by at least one embodiment of the present disclosure.

For example, as shown in Fig. 10, in at least one embodiment of the present disclosure, when the above-described video data processing method 10 is applied to a display apparatus having a scroll screen, the video content corresponding to a rolled area may not be displayed during the rolling of the scroll screen, such that the bitstream corresponding to the scroll area may not be decoded. In Fig. 10, the hatched area represents an area that does not participate in decoding. When the scroll screen is gradually rolled up from a fully extended state, a size of an area that does not be decoded becomes gradually larger. Therefore, according to the actual display area of the scroll screen, the received bitstream is partially decoded to achieve the technical effect of saving resource consumption in the decoding process, thereby improving the endurance of the product with the scroll screen and improving the user's experience on the product.

For example, in at least one embodiment of the present disclosure, as shown in Fig. 10, during rolling of the scroll screen, the partial decoding of the P-frame picture needs to satisfy that the MV prediction range of the current video frame to be displayed should be a sub-set of the display area of the reference frame. Although the tile encoding designed in the existing encoding standard can perform area division on a picture, only the coding tree unit (CTU) contained in the tile is coded in a scanning order to improve the parallel coding capability. Since the tile only limits the range of intra-prediction, i.e., the intra-prediction mode does not utilize pixel information beyond the tile range. However, the tile boundary may be exceeded for the inter-encoding and loop filtering modules, which also makes it necessary for the tile to decode the picture of a whole reference frame, such that a limited range of independent decoding cannot be achieved. Therefore, the existing tile encoding cannot be adapted to the encoding requirements of products such as sliding scroll screens. Based on the above-mentioned technical issues, at least one embodiment of the present disclosure provides a progressive encoding structure.

Fig. 11 is a schematic diagram of a division manner of a current video frame provided by at least one embodiment of the present disclosure.

For example, in at least one embodiment of the present disclosure, as shown in Fig. 11, the current video frame includes a first display area and at least one display sub-area arranged adjacently in sequence along the extension direction (from left to right). For example, in the example shown in Fig. 11, the first display area is represented as a *basic_tile* area on the left side, and the at least one display sub-area is represented as at least one *enhanced_tile* area on the right side.

For example, in some examples, the first display area may be a fixed display area, such as a fixed display area of a conventional display screen. For example, in a scroll screen application scenario, as shown in Fig. 10, the first display area is a display area that will always be displayed during rolling of the scroll screen. For example, in some examples, the first display area is one-half of the area of the video frame, which, for example, occupies one-half of the quantity of CTUs of the video frame. For example, in some examples, the first display area is one-third of the area of the video frame, which, for example, occupies one-third of the quantity of CTUs of the video frame. As another example, in some instances, the first display area is the entire area of the video frame, and it should be noted that the first display area are not particularly limited by the embodiments of the present disclosure, and may be set according to actual requirements. It should also be noted that, in the embodiments of the present disclosure, the "first display area" is used to indicate a display area (i.e. a basic area) for fixed display, and is not limited to a particular one of the display areas, nor to a particular order.

For example, in at least one embodiment of the present disclosure, the other display areas other than the first display area in the current video frame may be partitioned equally into at least one display sub-area, such as the at least one *enhanced_tile* shown in Fig. 11. For example, the quantity of display sub-areas varies with a rolling state of the scroll screen. It should be noted that, in the embodiments of the present disclosure, each of the at least one display sub-area has the same size, and the width or height of each display sub-area is greater than that of one CTU.

Fig. 12A is a schematic diagram of a rotational axis direction of a scroll screen provided by at least one embodiment of the present disclosure, and Fig. 12B is a schematic diagram of a rotational axis direction of another scroll screen provided by at least one embodiment of the present disclosure.

For example, in at least one embodiment of the present disclosure, the encoding direction of the video is generally from left to right in the horizontal direction and then from top to bottom in the vertical direction. In the example shown in Fig. 12A, the rotational axis direction of the scroll screen is considered to be perpendicular to the encoding direction of the video. For example, in at least one embodiment of the present disclosure, when the scroll screen is unrolled in the horizontal direction, the rotational axis moves from left to right, and the area to be displayed becomes larger and larger. In the example shown in Fig. 12B, the rotational axis direction of the scroll screen is considered to be parallel to the encoding direction of the video. For example, in at least one embodiment of the present disclosure, when the scroll screen is unrolled in the vertical direction, the rotational axis moves from top to bottom, and the area to be displayed becomes larger and larger.

For example, in the example shown in Fig. 12A, the current video frame may include a first display area (*basic_tile*) on the leftmost side and at least one display sub-area (*enhanced_tile*) arranged adjacently in sequence in the extension direction (from left to right). For example, in the example shown in Fig. 12B, the current video frame may include an uppermost first display tile (*basic_tile*) and at least one display sub-area (*enhanced_tile*) below the first display area arranged adjacently in sequence in the extension direction (from top to bottom).

It should be noted that, in the embodiment of the present disclosure, the "first display sub-area" is used to indicate the display sub-area (*enhanced_tile*) on the right side of the basic area/first display area (*basic_tile*), and the "second display sub-area" is used to indicate the display sub-area (*enhanced_tile*) below the basic area/first display area (*basic_tile*). The "first display sub-area" and the "second display sub-area" are not limited to a particular one or some of the display sub-areas, nor to a particular order.

For example, in at least one embodiment of the present disclosure, the motion vector of the current video block is in a first motion vector prediction range in response to the current video block being within the first display area of the current video frame.

For example, in at least one embodiment of the present disclosure, as shown in Fig. 11, an independent encoding scheme is employed for the basic area (*basic_tile*). For example, for each video frame of the video, the basic area *basic_tile* needs to be decoded. For a current video block within the *basic_tile* area, a valid MV prediction range (i.e., a first MV prediction range) is defined such that the MVs associated with the current video block are in the MV prediction range.

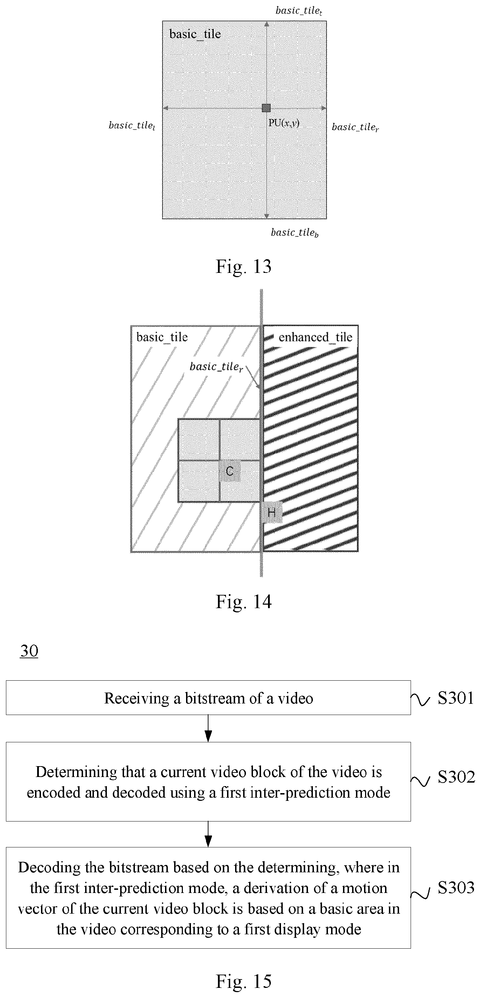

Fig. 13 is an encoding schematic diagram of the video block within the first display area provided by at least one embodiment of the present disclosure.

For example, in at least one embodiment of the present disclosure, the first motion vector prediction range is determined based on a position of the current video block, motion vector prediction precision, and a boundary of the first display area.

For example, in some examples, as shown in Fig. 13, four boundaries of the first display area *basic_tile* are represented as: the left boundary $basic\_tile_l$, the right boundary $basic\_tile_r$, the top boundary $basic\_tile_t$ and the bottom

boundary $basic\_tile_b$, and the coordinate of the current video block (e.g., the PU shown in Fig. 13) is (x, y). Considering that the MV prediction precision is different in different encoders, the MV prediction precision can be expressed as $2^{-n}$, where n is an integer. For example, in at least one embodiment of the present disclosure, the first MV prediction range may be determined by the following Equations (1)-(4).

$$B_{left} = (basic\_tile_l - x + 2^n) \ll n \qquad \text{Equation (1)}$$

$$B_{right} = (basic\_tile_r - x - 2^n) \ll n \qquad \text{Equation (2)}$$

$$B_{top} = (basic\_tile_t - y + 2^n) \ll n \qquad \text{Equation (3)}$$

$$B_{bottom} = (basic\_tile_b - y - 2^n) \ll n \qquad \text{Equation (4).}$$

In the above-mentioned Equations (1)-(4), $B_{left}$ represents the left boundary of the first MV prediction range, $B_{right}$ represents the right boundary of the first MV prediction range, $B_{top}$ represents the top boundary of the first MV prediction range, and $B_{bottom}$ represents the bottom boundary of the first MV prediction range. For example, in some embodiments of the present disclosure, the MV prediction precision may be indicated by a syntax element, may also be the default precision, etc., and embodiments of the present disclosure are not limited in this respect.

For example, in at least one embodiment of the present disclosure, the first MV prediction range defined by Equations (1)-(4) is both a limited range of the initial MV (corresponding to the search starting point) of the current video block and a limited range of the final MV (corresponding to the best matching point) of the current video block. Thus, it is ensured that the final MV of the current video block is within the corresponding MV prediction range (the first MV prediction range).

For example, in at least one embodiment of the present disclosure, in response to the current video block being within the basic area, all reference pixels used by the current video block are within the basic area. The basic area may also be defined by Equations (1)-(4) above.

For example, in at least one embodiment of the present disclosure, for a current video block positioned at (x, y) and in $basic\_tile$, all associated motion vectors should satisfy Equations (5) and (6) below.

$$mv\_x = \begin{cases} B_{left}\,, & mv\_x < B_{left} \\ mv\_x, & B_{left} < mv\_x < B_{right} \\ B_{right}\,, & mv\_x > B_{right} \end{cases} \qquad \text{Equation (5)}$$

$$mv\_y = \begin{cases} B_{top}\,, & mv\_y < B_{top} \\ mv\_y, & B_{top} < mv\_y < B_{bottom} \\ B_{bottom}\,, & mv\_y > B_{bottom} \end{cases} \qquad \text{Equation (6)}$$

In Equations (5) and (6), $mv\_x$ represents the horizontal component of the MV, and $mv\_y$ represents the vertical component of the MV. For example, based on the above-mentioned Equations (1) to (6), the first MV prediction range of the current video block within the $basic\_tile$ is acquired, thereby determining whether an MV associated with the current video block overflows a boundary.

For example, in at least one embodiment of the present disclosure, for an MV candidate list of the current video block, it may be determined whether each MV in the candidate list is in a corresponding MV prediction range. For example, in some instances, if an MV is determined not to be in the MV prediction range, the MV is removed from the candidate list and is not selected as the initial MV, so as to ensure that the search starting point for the MV is in the corresponding MV prediction range.

Fig. 14 is a schematic diagram of the current video block located at a boarder of the first display area provided by at least one embodiment of the present disclosure;

For example, in at least one embodiment of the present disclosure, during selecting an initial MV to determine a search starting point, whether the inter-prediction is performed in the Merge manner or the AMVP manner, motion information of the reference block at a corresponding position of a temporally adjacent encoded frame needs to be used when a temporal candidate list is constructed. As shown in Fig. 14, during the construction of the temporal candidate list, the motion information of the reference block H is generally used, and in response to the reference block H being not available, then the reference block H is substituted with the reference block C.

For example, in the example shown in Fig. 14, when the current video block is positioned at the right boundary of the first display area *basic_tile*, the motion information of the reference block positioned at position H cannot be acquired (because the motion information is not decoded). Therefore, in the encoding process, the motion information of the reference block H can be provided with a large error value, such that the motion information does not become the optimal candidate MV, i.e., the motion information of the reference block C is selected as the temporal candidate list.

For example, in at least one embodiment of the present disclosure, the current video frame includes the first display area and at least one display sub-area arranged adjacently in sequence along the extension direction, and the extension direction is from left to right. In response to the current video block being within the first display sub-area on a right side of the first display area in the current video frame, the motion vector of the current video block is limited in a second motion vector prediction range.

For example, in at least one embodiment of the present disclosure, the second motion vector prediction range is determined based on a position of the current video block, motion vector prediction precision, a boundary of the first display area, and a width of the first display sub-area.

For example, in at least one embodiment of the present disclosure, as shown in Fig. 12A, the current video frame includes the first display area *basic_tile* on the left side and at least one display sub-area *enhanced_tile* on the right side. The width of each display sub-area *enhanced_tile* is not smaller than the width of one CTU.

For example, in some examples, the left boundary of the MV prediction range (the second MV prediction range) of the display sub-area *enhanced_tile* is the left boundary of *basic_tile* of the current video frame, and the right boundary of the second MV prediction range is the right boundary of the *enhanced_tile* adjacent to the left side of the *enhanced_tile* where the current video block is located. For example, when another *enhanced_tile* does not exist on the left side of the *enhanced_tile* where the current video block is located, the right boundary of the second MV prediction range is the right boundary of the *basic_tile.*

For example, in at least one embodiment of the present disclosure, the MV prediction range of the current video block within the first display sub-area *enhanced_tile* positioned on the right side of the first display area *basic_tile*, i.e., the second MV prediction range, is determined by the following Equations (7) to (12).

$$left_k = (basic\_tile_l - x + 2^n) \ll n \qquad \text{Equation (7)}$$

$$right_k = (basic\_tile_r + (k-1) * s_{en} - x - 2^n) \ll n \qquad \text{Equation (8)}$$

$$top_k = (basic\_tile_t - y + 2^n) \ll n \qquad \text{Equation (9)}$$

$$bottom_k = (basic\_tile_b - y - 2^n) \ll n \qquad \text{Equation (10)}$$

In the Equations (7) to (12), *x* and *y* represents the position of the current video block (e.g., the PU), the four boundaries of the first display area *basic_tile* are represented as: $basic\_tile_l$, $basic\_tile_r$, $basic\_tile_t$, and $basic\_tile_b$, respectively, $s_{en}$ represents the width of the first display sub-area *enhanced tile,* the prediction precision of the MV is $2^{-n}$, and n is an integer. The left boundary $left_k$, the right boundary $right_k$, the top boundary $top_k$, and the bottom boundary $bottom_k$ denote MV boundaries of the k-th *enhanced_tile* in the left-to-right direction on the right side of the *basic_tile,* and k is an integer not less than 0. That is, the four MV boundaries constitute the MV prediction range of the current video block in the display sub-area *enhanced_tile* positioned on the right side of the display area basic_tile, i.e., the second MV prediction range.

Similar to the Equations (5) and (6), for a current video block that is within the k-th *enhanced_tile* in the left-to-right direction to the right of the first display area *basic_tile,* all MVs associated with the current video block should satisfy the constraints of the Equations (11) and (12).

$$mv\_x = \begin{cases} left_k, & mv\_x < left_k \\ \text{mv\_x}, left_k < mv\_x < right_k \\ right_k, & mv\_x > right_k \end{cases} \qquad \text{Equation (11)}$$

$$mv\_y = \begin{cases} top_k, & mv\_y < top_k \\ \text{mv\_y}, top_k < mv\_y < bottom_k \\ bottom_k, & mv\_y > bottom_k \end{cases} \qquad \text{Equation (12)}$$

In the Equations (10) and (11), *mv_x* represents the horizontal component of the MV, and *mv_y* represents the vertical component of the MV. For example, based on the above-mentioned Equations (11) to (12), it is determined whether an MV associated with the current video block overflows the boundary.

For example, in at least one embodiment of the present disclosure, in response to the current video block being within a k-th display sub-area on the right side of the first display area and k=1, the second MV prediction range is equal to the first MV prediction range.

For example, in at least one embodiment of the present disclosure, in response to the current video block being within a k-th display sub-area on a right side of the first display area and k being an integer greater than 1, a first right boundary of the first MV prediction range is different from a second right boundary of the second MV prediction range.

It should be noted that, in the embodiments of the present disclosure, the "first right boundary" is used to indicate the right boundary of the first MV prediction range, and the "second right boundary" is used to indicate the right boundary of the second MV prediction range. The terms the "first right boundary" and the "second right boundary" are not limited to a particular boundary or boundaries, nor to a particular order.

For example, based on the Equation (8) and Equation (2) above, when k=1, the right boundary $right_k$ of the second MV prediction range is equal to the right boundary $B_{right}$ of the first MV prediction range, and the first MV prediction range is equal to the second MV prediction range. When k is an integer greater than $1$, $right_k$ is not equal to $B_{right}$. It can be seen from the Equations (1) to (4) and the Equations (7) to (10) that the other three boundaries, except the right boundary, of the first MV prediction range are respectively equal to the other three boundaries of the second MV prediction range.

For example, in at least one embodiment of the present disclosure, the current video frame includes the first display area and at least one display sub-area arranged adjacently in sequence along the extension direction, and the extension direction is from top to bottom. In response to the current video block being within a second display sub-area below the first display area, a motion vector of the current video block is limited in a third motion vector prediction range.

For example, in at least one embodiment of the present disclosure, the third motion vector prediction range is determined based on a position of the current video block, motion vector prediction precision, a boundary of the first display area, and a height of the second display sub-area.

For example, in at least one embodiment of the present disclosure, as shown in Fig. 12B, the current video frame includes the first display area *basic_tile* on an upper side and at least one display sub-area *enhanced_tile* on a lower side. A height of each display sub-area *enhanced_tile* is not smaller than a height of one CTU.

For example, in at least one embodiment of the present disclosure, the MV prediction range of the current video block in the second display sub-area *enhanced_tile* positioned below the first display area *basic_tile,* i.e., the third MV prediction range, is determined by the following Equations (13) to (16).

$$left_m = (basic\_tile_l - x + 2^n) \ll n \qquad \text{Equation (13)}$$

$$right_m = (basic\_tile_r - x - 2^n) \ll n \qquad \text{Equation (14)}$$

$$top_m = (basic\_tile_t - y + 2^n) \ll n \qquad \text{Equation (15)}$$

$$bottom_m = (basic\_tile_b + (m-1) * s_{en} - y - 2^n) \ll n \qquad \text{Equation (16)}$$

For example, the MV prediction range of the current video block of an m-th *enhanced_tile* positioned below the *basic_tile* in the top-to-bottom direction, i.e., the third MV prediction range, is defined by the left boundary $left_m$, the right boundary $right_m$, and the top boundary $top_m$, and the bottom boundary $bottom_m$ defined by the Equations (13)-(16). In the Equations (13) to (16), x and y represents the position of the current video block (e.g., the PU), and the four boundaries of the first display area *basic_tile* are represented as: *basic_tile_l*, *basic_tile_r*, *basic_tilet,* and *basic_tile_b,* respectively, $s_{en}$ represents the height of the second display sub-area *enhanced_tile,* the prediction precision of the MV is $2^{-n}$, n is an integer, and m is an integer not smaller than 0.

Similar to the Equations (11) and (12), when the current video block is positioned at the m-th *enhanced tile* below the first display area *basic_tile,* all MVs associated with the current video block should satisfy the constraints of Equations (17) and (18).

$$mv\_x = \begin{cases} left_m, & mv\_x < left_m \\ mv\_x, left_m < mv\_x < right_m \\ right_m, & mv\_x > right_m \end{cases} \qquad \text{Equation (17)}$$

$$mv\_y = \begin{cases} top_m, & mv\_y < top_m \\ mv\_y, & top_m < mv\_y < bottom_m \\ bottom_m, & mv\_y > bottom_m \end{cases} \quad \text{Equation (18)}$$

In the Equations (17) and (18), $mv\_x$ represents the horizontal component of the MV, and $mv\_y$ represents the vertical component of the MV. For example, based on the above-mentioned Equations (17) to (18), it is determined whether an MV associated with the current video block overflows the boundary.

For example, in at least one embodiment of the present disclosure, in response to the current video block being within an m-th second display sub-area below the first display area and m=1, the third motion vector prediction range is equal to the first motion vector prediction range.

For example, in at least one embodiment of the present disclosure, in response to the current video block being within an m-th second display sub-area below the first display area and m being an integer greater than 1, a first bottom boundary of the first motion vector prediction range is different from a third bottom boundary of the third motion vector prediction range.

It should be noted that, in the embodiments of the present disclosure, "first bottom boundary" is used to indicate the bottom boundary of the first MV prediction range, and "third bottom boundary" is used to indicate the bottom boundary of the third MV prediction range. The terms the "first bottom boundary" and the "third bottom boundary" are not limited to a particular boundary or boundaries, nor to a particular order.

For example, based on the Equation (4) and Equation (16) above, when m=1, the bottom boundary $bottom_m$ of the third MV prediction range is equal to the bottom boundary $B_{bottom}$ of the first MV prediction range, and the first MV prediction range is equal to the third MV prediction range. When k is an integer greater than 1, $bottom_m$ is not equal to $B_{bottom}$. It can be seen from the Equations (1) to (4) and the Equations (13) to (16) that the other three boundaries, except the bottom boundary, of the first MV prediction range are respectively equal to the other three boundaries of the second MV prediction range.

For example, in at least one embodiment of the present disclosure, in response to the current video block being positioned outside the first display area or the basic area of the current video frame, a temporal candidate motion vector predictor in the motion vector prediction candidate list is calculated by using a spatial candidate motion vector predictor.

For example, in some examples, in a case where the current video block is positioned outside the first display area/basic area (e.g., positioned to the right or below the first display area), whether in the Merge mode or the AMVP mode, the motion information of the reference block H and the reference block C cannot be acquired during the construction of the temporal candidate list. For example, in some examples, according to an order of the spatial candidate list, a motion vector MV of the first reference block is selected to be scaled and added to the temporal candidate list, as shown in Equation (19) below.

$$MV_t = \frac{td}{tb} MV_{x\_ref} \quad \text{Equation (19)}$$

$MV_{x\_ref}$ denotes the motion vector of the reference block at position $X$, where $x$=A0, A1, B0, B1, and B2. $td$ and $tb$ respectively represent distances from the current video block and the $X$ reference block to their respective reference picture, respectively.

It should be noted that the embodiments of the present disclosure do not limit which spatial candidate motion vector predictor is specifically used to replace the temporal candidate motion vector predictor, and may be set according to actual requirements.

For example, in at least one embodiment of the present disclosure, performing a conversion between the current video block of a current video frame and the bitstream of the video may include a decoding process. For example, in some examples, the received bitstream is fully decoded for display. As another example, in some instances, when the display terminal only partially displays, e.g., the display terminal has a scroll screen as shown in Fig. 1, only partial decoding of the received bitstream is required, thereby reducing the use of decoding resources and improving the coding efficiency of the video.

Fig. 15 is a schematic diagram of another video data processing method provided by at least one embodiment of the present disclosure.

For example, in at least one embodiment of the present disclosure, another video data processing method 30 is provided. The video data processing method 30 can be applied to various application scenarios related to video decoding (i.e. applied to a decoding side). For example, as shown in Fig. 15, the video data processing method 30 includes the following operations S301 to S303.

Step S301: receiving a bitstream of a video.

Step S302: determining that a current video block of the video is encoded and decoded using a first inter-prediction mode.

Step S303: decoding the bitstream based on the determining, where in the first inter-prediction mode, a derivation of a motion vector of the current video block is based on a basic area in the video corresponding to a first display mode.

For example, in at least one embodiment of the present disclosure, for a decoding side, based on a received bitstream of a video, whether the video applies the first display mode and a corresponding video extension direction may be determined. For example, in some examples, when the received bitstream includes a syntax element "enhanced_tile_enabled_hor" (or the value of the syntax element is 1), then the first display mode is applied to the current video and the extension direction is horizontal (e.g., from left to right). For example, in some other examples, when the received bitstream includes a syntax element "enhanced_tile_enabled_ver" (or the value of the syntax element is 1), then the first display mode is applied to the current video and the extension direction is vertical (e.g. from top to bottom).

It should be noted that in the embodiments of the present disclosure, for the decoding process, the application of the first display mode is not only determined based on the relevant syntax element in the received bitstream, but also takes the actual situation of the display terminal into consideration. For example, in some examples, the first display mode is not applied when the video display mode of the display terminal does not match the first display mode identified in the bitstream. For example, when the relevant syntax element in the bitstream indicates that the current video applies the first display mode and the extension direction is the horizontal direction, and simultaneously, the video display mode of the display terminal is unrolled in the vertical direction, it is determined that the first display mode is not applied to the current video. As another example, when the relevant syntax element in the bitstream indicates that the first display mode is applied to the current video and the extension direction is the horizontal direction, and simultaneously, the video display mode of the display terminal is conventional display (e.g., full screen display) without requiring unrolling, it is determined that the first display mode is not applied to the current video. The embodiments of the present disclosure do not impose specific limitations on this and can be set according to actual situations.

For example, in at least one embodiment of the present disclosure, for the step S303, decoding the bitstream includes: determining an area to be decoded of a current video frame; and decoding the bitstream based on the area to be decoded. The area to be decoded at least includes a first display area corresponding to the basic area.

For example, in at least one embodiment of the present disclosure, as shown in Fig. 11, the encoding of a current video frame mainly includes the encoding of the basic area/first display area *basic_tile* and the encoding of at least one display sub-area *enhanced_tile* arranged adjacently in sequence from left to right. For example, the *basic_tile* area of each video frame in the video needs to be decoded, and the quantity of *enhanced_tile* areas that are decoded may be determined according to the size of the display area and the quantity of *enhanced_tile* areas that are decoded in the previous frame. For example, in some examples, the current video frame can decode at most one more *enhanced_tile* than the corresponding reference frame.

For example, in at least one embodiment of the present disclosure, only the display area to be displayed needs to be decoded, thus the area to be decoded needs to be defined in the decoding process. For example, in the embodiments of the present disclosure, the area to be decoded is bounded by the boundary of the coding unit, or the coding unit is used as a unit of the area to be decoded. It should be noted that, in the embodiments of the present disclosure, the coding unit is described taking the coding tree unit (CTU) as an example.

For example, in at least one embodiment of the present disclosure, the area to be decoded ($dec_t$) may be determined based on at least one selected from the group consisting of a quantity ($l_t$) of pixels to be displayed and a quantity ($n_t$) of video coding units CTU to be displayed of the current video frame, a quantity ($n_{basic\_tile}$) of CTU(s) of a first display area (*basic_tile*), a quantity ($l_{t-1}$) of displayed pixels of a previous video frame, and a quantity ($b_{t-1}$) of CTU(s) of the decoded area of the previous video frame.

For example, in at least one embodiment of the present disclosure, in response to the quantity ($n_t$) of CTU(s) to be displayed of the current video frame being greater than the quantity ($b_{t-1}$) of CTU(s) of the decoded area of the previous video frame, or in response to the quantity ($n_t$) of CTU(s) to be displayed of the current video frame being equal to the quantity ($b_{t-1}$) of CTU(s) of the decoded area of the previous video frame, and the quantity ($l_t$) of pixel(s) to be displayed of the current video frame being greater than the quantity ($l_{t-1}$) of displayed pixels of the previous video frame, it is determined that the area to be decoded ($dec_t$) includes a decoded area ($dec_{t-1}$) of the previous video frame and one new display sub-area (*enhanced_tile*).

For example, in at least one exemplary embodiment of the present disclosure, the current video frame at most only decodes one more display sub-area *enhanced_tile* than the previous video frame, i.e., one more new display sub-area *enhanced_tile*.

For example, in at least one embodiment of the present disclosure, in response to the quantity ($n_t$) of CTU(s) to be displayed of the current video frame being greater than the quantity ($n_{basic\_tile}$) of CTU(s) of the first display area and the quantity ($n_t$) of CTU(s) to be displayed of the current video frame being smaller than the quantity ($b_{t-1}$) of CTU(s) of the decoded area of the previous video frame, or in response to the quantity ($n_t$) of CTU(s) to be displayed of the current video frame being greater than the quantity ($n_{basic\_tile}$) of CTU(s) of the first display area, the quantity ($n_t$) of CTU(s) to be displayed of the current video frame being equal to the quantity ($b_{t-1}$) of CTU(s) of the decoded area of the previous video frame, and the quantity ($l_t$) of pixels to be displayed of the current video frame being not greater than the quantity ($l_{t-1}$) of displayed pixels of the previous video frame, it is determined that the area to be decoded ($dec_t$) of the current video frame includes an area to be displayed of the current video frame. For example, the area to be displayed of the current video frame includes the quantity ($l_t$) of pixels to be displayed of the current video frame.

For example, in at least one embodiment of the present disclosure, the area to be decoded ($dec_t$) may be determined according to the following Equation, as shown below.

$$dec_t = \begin{cases} basic\_tile & , n_t \leq n_{basic_{tile}} \\ dec_{t-1} & , n_{basic\_tile} < n_t < b_{t-1} \text{ or } n_t = b_{t-1} > n_{basic\_tile}, l_t \leq l_{t-1} \\ dec_{t-1} + enhanced\_tile & , n_t > b_{t-1} \ ( \ n_t > n_{basic\_tile} \ ) \text{ or } n_t = b_{t-1} > n_{basic\_tile}, l_t > l_{t-1} \end{cases}$$

For example, if, $n_{basic\_tile} < n_t < b_{t-1}$ or $n_t = b_{t-1} > n_{basic\_tile}, l_t \leq l_{t-1}$, it represents that the display content of the video is becoming smaller or remains unchanged, and then the content of the area to be displayed of the current video frame is decoded. If $n_t > b_{t-1}$ ( $n_t > n_{basic\_tile}$ ) or $n_t = b_{t-1} > n_{basic\_tile}, l_t > l_{t-1}$, it represents that the display content of the video is becoming larger or tends to become larger, and then the current video frame needs to decode one more video content corresponding to the *enhanced_tile* than the decoded area of the previous frame.

For example, in at least one embodiment of the present disclosure, when the area to be decoded of the current video frame includes only the fixedly displayed display area (e.g., the first display area), i.e., $dec_t$ = *basic_tile*, only *basic_tile* is decoded separately. For example, when the area to be decoded of the current video frame includes a fixedly displayed display area (e.g., the first display area) and at least one display sub-area (*enhanced_tile*), i.e., $dec_t$ = *basic_tile* + $\alpha$ *enhanced_tile*, $\alpha$ is an additional quantity of *enhanced_tile*(s) to be decoded. *basic_tile* and a plurality of *enhanced_tiles* can be decoded in parallel.

For example, in at least one embodiment of the present disclosure, a CTU for an area that does not need to be displayed may be filled directly with a zero pixel without decoding. In this way, the video coding efficiency can be improved, the coding process can be simplified, and product energy source can also be saved.

It should be noted that in the embodiment of the present disclosure, other pixels may be used to fill the CTUs in the area that is not required to be displayed, not necessarily zero pixels, and it may be set according to actual requirements.

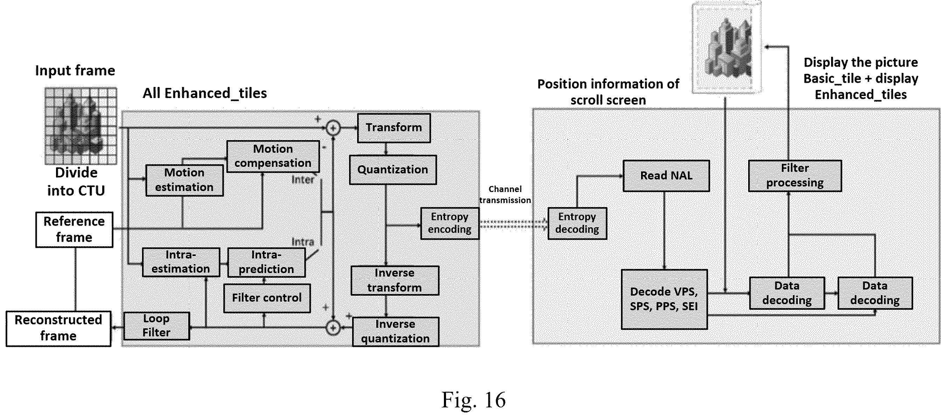

For example, in at least one embodiment of the present disclosure, when the display terminal is in a fully rolled-up state, i.e., no area to be displayed is present, it is known from the foregoing Equation for determining the area to be decoded ($dec_t$) that the basic area *basic_tile* still needs to be decoded. Fig. 16 is a schematic block diagram of a video coding system in LDP according to at least one embodiment of the present disclosure.

For example, in at least one embodiment of the present disclosure, a general description of the video coding system of Fig. 16 may be seen from the associated descriptions of Figs. 2-4 and will not be repeated here. In embodiments of the present disclosure, for an encoding process in inter-prediction mode, the range of motion vectors associated with the current video block is limited to avoid the use of invalid reference pixel information. For the decoding process, the bitstream can be partially decoded according to the actually displayed area, so as to reduce consumption of decoding resources in a non-displayed part and improve a coding efficiency.

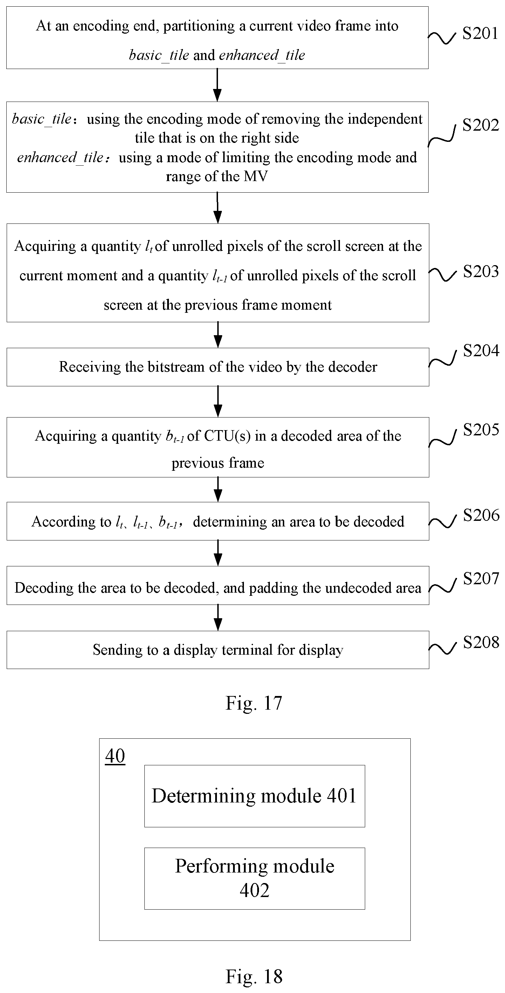

Fig. 17 is a schematic flow diagram of a video data processing method in an LDP configuration according to at least one embodiment of the present disclosure;

For example, in at least one embodiment of the present disclosure, a video data processing method is provided, as shown in Fig. 17. The video data processing method includes steps S201-S206.

Step S201: at an encoding end, partitioning a current video frame into *basic_tile* and *enhanced_tile.* For example, in the example shown in Fig. 12A, the encoder partitions a picture into two tiles on left and right sides, the tile on the left side is *basic_tile* and the tile on the right side is at least one *enhanced_tile*. For example, in some examples, a 1:1 allocation is made according to the quantity of CTU(s) in a row. For example, in some other examples, a 1:2 allocation is made according to the quantity of CTU(s) in a row. As another example, when the quantity of CTU(s) in one row is odd, the total quantity of CTU(s) of a plurality of *enhanced_tiles* per row is one more than the quantity of CTU(s) in one row of *basic_tile.* The embodiment of the present disclosure is not limited to the specific partition, and may be set according to actual requirements.

Step S202: for the *basic_tile* on the left side, using the encoding mode of removing the independent tile that is on the right side, and for the *enhanced_tile* on the right side, using the direction dependent on *basic_tile* on the left side and limiting the encoding mode and range of the MV. For example, in this step, a selection process of an initial MV in the inter-encoding AMVP and Merge processes and a modification of a motion search algorithm are involved, so as to realize that the bitstream can be adapted to the requirements of unrolling and rolling in decoding.

Step S203: acquiring a quantity $l_t$ of unrolled pixels of the scroll screen at the current moment and a quantity $l_{t-1}$ of unrolled pixels of the scroll screen at the previous frame moment, and sending the quantity $l_t$ and the quantity $l_{t-1}$ to a decoder.

Step S204: receiving the bitstream of the video (not limited to H.264/H.265/H.266) by the decoder.

Step s205: acquiring a quantity $b_{t-1}$ of CTU(s) in a decoded area of the previous frame.

Step S206: determining an area to be decoded according to the quantity $l_t$ of unrolled pixels of the scroll screen at the current moment and the quantity $l_{t-1}$ of unrolled pixels of the scroll screen at the previous frame moment, and the quantity $b_{t-1}$ of CTU(s) of the decoded area of the previous frame. For example, the area to be decoded includes a *basic_tile* and a plurality of corresponding *enhanced_tiles.*

Step S207: decoding the area to be decoded, and padding the undecoded area.

Step S208: sending the content of the area to be decoded to a display terminal for display.

It should be noted that the specific operations with respect to each of the steps S201-S206 shown in Fig. 17 are described in detail above and will not be described in detail herein.

Therefore, according to the video data processing method provided by at least one embodiment of the present disclosure, the bitstream of the video can be partially decoded according to the area to be displayed, thereby reducing resource decoding consumption of an undisplayed part and improving coding efficiency.

It should be noted that the execution order of the various steps of the video data processing method 10 is not limited in the various embodiments of the present disclosure, and although the execution process of the various steps has been described above in a particular order, it should not be construed as limiting the embodiments of the present disclosure. The various steps in the video data processing method 10 may be performed serially or in parallel, as may be desired. For example, video data processing method 10 may also include more or fewer steps, and embodiments of the present disclosure are not limited in this respect.

Fig. 18 is a schematic block diagram of a video data processing apparatus according to at least one embodiment of the present disclosure.

For example, at least one embodiment of the present disclosure provides a video data processing apparatus 40, as shown in Fig. 18. The video data processing apparatus 40 includes a determining module 401 and a performing module 402. The determining module 401 is configured to determine, for a current video block of the video, to use a first inter-prediction mode for coding. For example, the determining module 401 may implement the step S101, and a specific implementation method thereof may refer to the relevant description of the step S101, which will not be described in detail herein. The performing module 402 is configured to perform a conversion between the current video block and a bitstream of the video based on the determining, where in the first inter-prediction mode, a derivation of a motion vector of the current video block is based on a basic area in the video corresponding to a first display mode. For example, the performing module 402 may implement the step S102, and a specific implementation method thereof may refer to the relevant description of the step S102, which will not be described in detail herein.

It should be noted that the determining module 401 and the performing module 402 may be implemented by software, hardware, firmware, or any combination thereof, for example, as a determining circuit 401 and a performing circuit 402, respectively, and the embodiments of the present disclosure do not limit their embodiments.

It should be understood that video data processing apparatus 40 according to at least one embodiment of the present disclosure may implement similar technical effects to video data processing method 10 previously described. For example, in the video data processing apparatus 40 according to at least one embodiment of the present disclosure, by the above-mentioned method, the bitstream may be partially decoded according to an area that is actually required to be displayed, thereby reducing the consumption of decoding resources of the undisplayed part and improving coding efficiency.

It should be noted that in the embodiments of the present disclosure, the video data processing apparatus 40 may include more or less circuits or units, and the connection relationship between the respective circuits or units is not limited and may be determined according to actual requirements. The specific constitution of each circuit is not limited, and may be constituted by an analog component according to a circuit principle, may be constituted by a digital chip, or may be constituted in other suitable manners.

For example, at least one embodiment of the present disclosure further provides a display apparatus, which includes: a video data processing apparatus and a scroll screen. The video data processing apparatus is configured to decode a received bitstream according to the method of any one of the foregoing embodiments and send a decoded pixel value to the scroll screen for display. For example, in some examples where the scroll screen is fully extended and there is no non-display area, then the video data processing apparatus fully decodes the received bitstream. As another example, in other examples, as shown in Fig. 1, the scroll screen includes a rolled portion and an unrolled portion, i.e., there is a display area and a non-display area, and the video data processing apparatus partially decodes the received bitstream.

For example, in at least one embodiment of the present disclosure, in response to the scroll screen including a display area and a non-display area in operation, the video data processing apparatus decodes the bitstream based on a size of the display area at a current moment and a previous frame moment. For example, as shown in Fig. 1, when the scroll screen is in a partially extended state, the video data processing apparatus need only decode the content corresponding to the display area. For example, the video data processing apparatus may determine an area to be decoded based on the size of the display area at the current moment and the previous frame moment. For example, the video data processing apparatus may determine a quantity $I_t$ of pixels to be displayed of the video frame at the current moment and a quantity $I_{t-1}$ of pixels to be displayed of the video frame at the previous frame moment according to the size of the display area at the current moment and the previous frame moment. The operation of determining the area to be decoded has been described in detail in the foregoing, and will not be described in detail herein.

For example, in at least one embodiment of the present disclosure, the display apparatus includes a curling state judgment apparatus in addition to the video data processing apparatus and the scroll screen. For example, the curling state judgment apparatus is configured to detect a size of a display area of the scroll screen and transmit the size of the display area to the video data processing apparatus, to cause the video data processing apparatus to decode the bitstream based on the size of the display area at a current moment and a previous frame moment. It should be noted that the curling state judgment apparatus may be implemented by a software, a hardware, a firmware, or any combination thereof, for example, as a curling state judgment circuit, and the embodiments of the present disclosure do not limit the embodiments of the curling state judgment apparatus.

It should be noted that the embodiments of the present disclosure do not limit the type of display apparatus. For example, the display apparatus may be a mobile terminal, a computer, a tablet computer, a telephone watch, a television, etc. and embodiments of the present disclosure are not limited in this respect. Also, embodiments of the present disclosure do not limit the type of the scroll screen. For example, in embodiments of the present disclosure, the scroll screen may be any type of display screen having a variable display area, including but not limited to the scroll screen type shown in Fig. 1. For example, in the embodiments of the present disclosure, the video data processing apparatus included in the display apparatus may be implemented as the video data processing apparatus 40/90/600, etc. mentioned in the present disclosure, and the embodiments of the present disclosure do not limit the specific embodiments of the video data processing apparatus.

It should be noted that in the embodiments of the present disclosure, the display apparatus may include more or less circuits or units, and the connection relationship between the respective circuits or units is not limited and may be determined according to actual requirements. The specific constitution of each circuit is not limited, and may be constituted by an analog component according to a circuit principle, may be constituted by a digital chip, or may be constituted in other suitable manners.

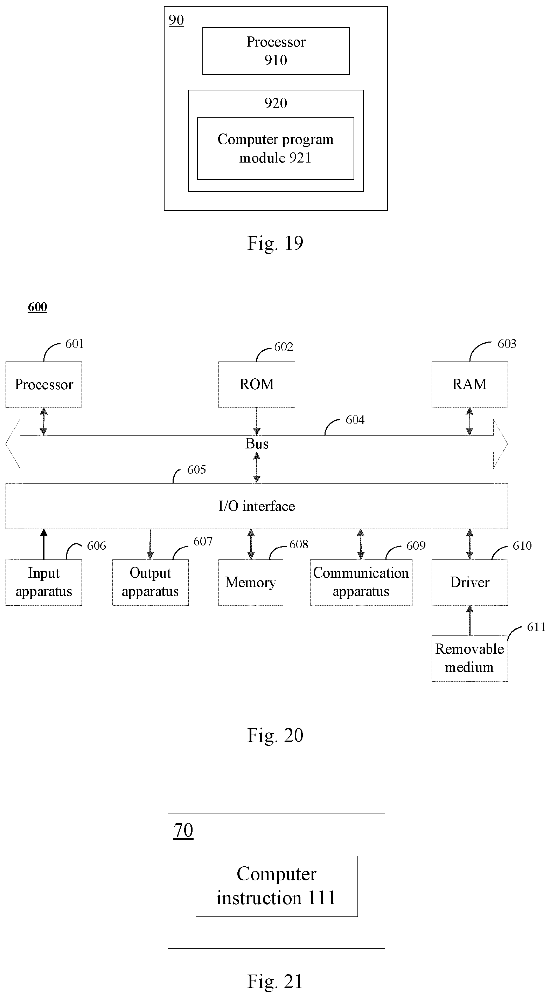

Fig. 19 is a schematic block diagram of another video data processing apparatus provided by at least one embodiment of the present disclosure.

At least one embodiment of the present disclosure further provides a video data processing apparatus 90. As shown in Fig. 19, the video data processing apparatus 90 includes a processor 910 and a memory 920. The memory 920 includes one or more computer program modules 921. One or more computer program modules 921 are stored in the memory 920 and configured to be performed by the processor 910, the one or more computer program modules 921 include instructions used to perform the video data processing method 10 according to at least one embodiment of the present disclosure. When the instructions are executed by the processor 910, the processor 910 may perform one or more steps of the video data processing method 10 according to at least one embodiment of the present disclosure. The memory 920 and the processor 910 may be interconnected by a bus system and/or other form of connection mechanism (not shown).

For example, the processor 910 may be a central processing unit (CPU), a digital signal processor (DSP), or other form of processing unit having data processing capabilities and/or program execution capabilities, such as a field programmable gate array (FPGA) or the like. For example, the central processing unit (CPU) may be an X86 or ARM architecture or the like. The processor 910 may be a general purpose or special purpose processor that may control other assemblies in the video data processing apparatus 90 to perform desired functions.

For example, the memory 920 may include any combination of one or more computer program products, which may include various forms of computer-readable storage media, such as a volatile memory and/or a non-volatile memory. The volatile memory may include, for example, random access memory (RAM) and/or cache memory (cache), etc. The volatile memory may include, for example, a read-only memory (ROM), a hard disk, an erasable programmable read-only memory (EPROM), a portable compact disc read-only memory (CD-ROM), a USB memory, a flash memory, etc. The one or more computer program modules 921 may be stored on the computer-readable storage medium, and the processor 910 may execute the one or more computer program modules 921 to perform the various functions of the video data processing apparatus 90. Various applications and various data may also be stored in the computer-readable storage medium, as well as various data used and/or generated by the applications. Specific functions and technical effects of the video data processing apparatus 90 can be seen from the foregoing description of the video data processing method 10/30, and will not be described in detail herein.

Fig. 20 is a schematic block diagram of yet another video data processing apparatus provided by at least one embodiment of the present disclosure.

The terminal device in the embodiment of the present disclosure may include, but is not limited to, a mobile terminal such as a mobile phone, a notebook computer, a digital broadcast receiver, a PDA (personal digital assistant), a PAD (tablet computer), a PMP (portable multimedia player), an in-vehicle terminal (e.g., in-vehicle navigation terminal), etc., and a fixed terminal such as a digital TV, a desktop computer, etc. The video data processing apparatus 600 shown in Fig. 20 is only one example and should not impose any limitation on the functionality and scope of use of the embodiments of the present disclosure.

As shown in Fig. 20, in some examples, the video data processing apparatus 600 includes a processor 601 (e.g., a central processor, a graphics processor, etc.) that may perform various suitable actions and processes in accordance with programs stored in a read-only memory (ROM) 602 or programs loaded from a memory 608 into a random access memory (RAM) 603. In the RAM 603, various programs and data required for the operation of the computer system are also stored. The processor 601, the ROM 602 and the RAM 603 are connected to each other via a bus 604. An input/output (I/O) interface 605 is also coupled to the bus 604.

In general, the following components may be connected to the I/O interface 605: an input apparatus 606 including, for example, a touch screen, a touch pad, a keyboard, a mouse, a camera, a microphone, an accelerometer, a gyroscope, etc.; an output apparatus 607 including, for example, a liquid crystal display (LCD), a speaker, a vibrator, etc.; a memory 608 including, for example, a magnetic tape, a hard disc, etc.; and a communication apparatus 609 including network interface cards such as LAN cards and modems. The communication apparatus 609 allows the video data processing apparatus 600 to communicate in a wireless or wired manner with other devices to exchange data and perform communication processing via networks such as the Internet. The driver 610 is also connected to the I/O interface 605 as desired. A removable medium 611, such as a magnetic disk, optical disk, magneto-optical disk, semiconductor memory, or the like, is mounted on the drive 610 as desired such that a computer program read therefrom is installed into the memory 608 as desired. Although Fig. 20 illustrates a video data processing apparatus 600 including various apparatuses, it should be understood that not all illustrated apparatuses are required to be implemented or included. More or fewer apparatuses may alternatively be implemented or included.

For example, the video data processing apparatus 600 may further include a peripheral interface (not shown) or the like. The peripheral interface may be of various types, such as a USB interface, a lighting interface, etc. The communication apparatus 609 may communicate via wireless communication with networks such as the Internet, intranets and/or wireless networks such as cellular telephone networks, wireless local area networks (LAN) and/or metropolitan area networks (MAN) and other devices. The wireless communication may use any of a variety of communication standards, protocols, and technologies including, but not limited to, global system for mobile communications (GSM), enhanced data GSM environment (EDGE), wideband code division multiple access (W-CDMA), code division multiple access (CDMA), time division multiple access (TDMA), Bluetooth, Wi-Fi (e.g. based on the IEEE 802.11a, IEEE 802.11b, IEEE 802.11g, and/or IEEE 802.11n standards), voice over internet protocol (VoIP), Wi-MAX, protocols for e-mail, instant messaging and/or short message service (SMS), or any other suitable communication protocols.

For example, the video data processing apparatus 600 may be any apparatus such as a cell phone, a tablet computer, a notebook computer, an e-book, a television, or any combination of data processing apparatus and hardware, and embodiments of the present disclosure are not limited in this aspect.

For example, the process described above with reference to the flow diagram may be implemented as computer software programs in accordance with the embodiment of the present disclosure. For example, an embodiment of the present disclosure includes a computer program product including a computer program embodied on a non-transitory computer-readable medium, the computer program including program codes for performing the method illustrated in the flow diagram. In such an embodiment, the computer program may be downloaded and installed from the network via a communication apparatus 609, or from the memory 608, or from the ROM 602. When the computer program is executed by the processing apparatus 601, the video data processing method 10 disclosed in the present disclosure is performed.

It should be noted that the computer-readable medium described above in the present disclosure can be a computer-readable signal medium or a computer-readable storage medium, or any combination of the two. The computer-readable storage medium can be, for example, but not limited to, an electronic, magnetic, optical, electromagnetic, infrared, or semiconductor system, apparatus, or means, or a combination of any of the foregoing. More specific examples of computer-readable storage medium may include, but are not limited to, an electrical connection with one or more wires, a portable computer disc, a hard drive, a random access memory (RAM), a read-only memory (ROM), an erasable programmable read-only memory (EPROM) or a flash memory (FLASH), a fiber optic, a portable compact disc read-only memory (CD-ROM), an optical storage device, a magnetic storage device, or any suitable combination thereof. In the embodiments of the present disclosure, the computer-readable storage medium may be any tangible medium that can contain or store programs for use by or in connection with an instruction execution system, apparatus, or means. In the embodiments of the present disclosure, the computer-readable signal medium may include a data signal, embodied in baseband or propagated as part of a carrier wave, that carries the computer-readable program codes. Such propagated data signals may take many forms, including but not limited to electromagnetic signals, optical signals, or any suitable combination of the preceding. The computer-readable signal medium can also be any computer-readable medium other than a computer-readable storage medium, and the computer-readable signal medium can send, propagate, or transport the programs for use by or in connection with the instruction execution system, apparatus, or means. The program codes contained on the computer-readable medium may be transmitted over any suitable medium, including but not limited to: a wire, a fiber optic cable, an RF (radio frequency), and the like, or any suitable combination of the foregoing.

The computer-readable medium mentioned above may be included in the video data processing apparatus 600 mentioned above; and may also exist independently without being assembled into the video data processing apparatus 600.

Fig. 21 is a schematic block diagram of a non-instantaneous readable storage medium according to at least one embodiment of the present disclosure.

An embodiment of the present disclosure also provides a non-instantaneous readable storage medium. Fig. 21 is a schematic block diagram of a non-instantaneous readable storage medium according to at least one embodiment of the present disclosure. As shown in Fig. 21, the non-transitory readable storage medium 70 stores computer instructions 111. When the computer instructions 111 are executed by the processor, the processor performs one or more steps of the video data processing method 10 described above.

For example, the non-transitory readable storage medium 70 may be any combination of one or more computer-readable storage media. For example, one computer-readable storage medium contains computer-readable program codes for obtaining a first display mode of the video, another computer-readable storage medium contains computer-readable program codes for determining a first sub-set of a plurality of available inter-prediction modes at current for the current video block of the video, and yet another computer-readable storage medium contains computer-readable program codes for selecting an available first inter-prediction mode from the first sub-set and performing a conversion between the current video block of the current video frame and the bitstream of the video, where an available effective range of the motion vector used by each member of the first sub-set is determined based on a basic area in the video corresponding to the first display mode. Of course, the various program codes described above may also be stored on the same computer-readable medium, and embodiments of the present disclosure are not limited in this respect.

For example, when the program codes are read by the computer, the computer may execute the program codes stored in the computer storage medium to perform, for example, the video data processing method 10 according to any one of the embodiments of the present disclosure.

For example, the storage medium may include a memory card of a smart phone, a storage component of a tablet computer, a hard disk of a personal computer, a random access memory (RAM), a read-only memory (ROM), an erasable programmable read-only memory (EPROM), a portable compact disc read-only memory (CD-ROM), a flash memory, or any combination of the foregoing storage media, as well as other suitable storage media. For example, the readable storage medium may also be the memory 920 of Fig. 19, and the description may be seen from the foregoing and will not be repeated here.

In the present disclosure, the terms "plurality" indicates two or more, unless specifically limited otherwise.

Other implementations of the present disclosure will be apparent to a person skilled in the art from consideration of the description and practice of the disclosure herein. The present disclosure is intended to cover any variations, uses, or adaptive changes of the present disclosure that follow the general principles of the present disclosure and include common knowledge or customary technical means in the art that are not disclosed in the present disclosure. It is intended that the description and embodiments be considered as exemplary only, with a true scope and spirit of the present disclosure being indicated by the following claims.

It should be understood that the present disclosure is not limited to the precise structures described above and shown in the accompanying drawings, and that various modifications and changes may be made without departing from the scope thereof. The scope of the disclosure is only limited by the appended claims.

## Claims

1. A video data processing method, comprising:

   determining, for a current video block of a video, to use a first inter-prediction mode for coding, and performing a conversion between the current video block and a bitstream of the video based on the determining, wherein, in the first inter-prediction mode, a derivation of a motion vector of the current video block is based on a basic area in the video corresponding to a first display mode.

2. The method according to claim 1, wherein, for a current video frame of the video, a first display area along an extension direction from a video extension starting position defined by the first display mode is used as the basic area.

3. The method according to claim 2, wherein the motion vector of the current video block is in a first motion vector prediction range in response to the current video block being within the first display area.

4. The method according to claim 3, wherein the first motion vector prediction range is determined based on a position of the current video block, motion vector prediction precision, and a boundary of the first display area.

5. The method according to claim 3 or 4, wherein the current video frame comprises the first display area and at least one display sub-area arranged adjacently in sequence along the extension direction, and the extension direction is from left to right, and

   in response to the current video block being within a first display sub-area on a right side of the first display area in the current video frame, the motion vector of the current video block is in a second motion vector prediction range.

6. The method according to claim 5, wherein the second motion vector prediction range is determined based on a position of the current video block, motion vector prediction precision, a boundary of the first display area, and a width of the first display sub-area.

7. The method according to claim 5 or 6, wherein in response to the current video block being within a k-th first display sub-area on the right side of the first display area and k=1, the second motion vector prediction range is equal to the first motion vector prediction range.

8. The method according to any one of claims 5-7, wherein in response to the current video block being within a k-th first display sub-area on the right side of the first display area and k being an integer greater than 1, a first right boundary of the first motion vector prediction range is different from a second right boundary of the second motion vector prediction range.

9. The method according to any one of claims 3-8, wherein the current video frame comprises the first display area and at least one display sub-area arranged adjacently in sequence along the extension direction, and the extension direction is from top to bottom, and

   in response to the current video block being within a second display sub-area below the first display area, the motion vector of the current video block is in a third motion vector prediction range.

10. The method according to claim 9, wherein the third motion vector prediction range is determined based on a position of the current video block, motion vector prediction precision, a boundary of the first display area, and a height of the second display sub-area.

11. The method according to claim 9 or 10, wherein in response to the current video block being within an m-th second display sub-area below the first display area and m=1, the third motion vector prediction range is equal to the first motion vector prediction range.

12. The method according to any one of claims 9-11, wherein in response to the current video block being within an m-th second display sub-area below the first display area and m being an integer greater than 1, a first bottom boundary of the first motion vector prediction range is different from a third bottom boundary of the third motion vector prediction range.

13. The method according to any one of claims 2-12, wherein in response to the current video block being outside the basic area, a temporal candidate motion vector predictor in a motion vector prediction candidate list of the current video block is calculated based on a spatial candidate motion vector predictor.

14. The method according to any one of claims 2-13, wherein in response to the current video block being within the basic area, all reference pixels used by the current video block are in the basic area.

15. The method according to any one of claims 1-14, wherein the first inter-prediction mode comprises a Merge prediction mode, an advanced motion vector prediction AMVP mode, a Merge mode with a motion vector difference, a bi-directional weighted prediction mode, or an affine prediction mode.

16. A video data processing method, comprising:

   receiving a bitstream of a video;
   determining that a current video block of the video is coded using a first inter-prediction mode, and
   decoding the bitstream based on the determining,
   wherein in the first inter-prediction mode, a derivation of a motion vector of the current video block is based on a basic area in the video corresponding to a first display mode.

17. The method according to claim 16, wherein the decoding the bitstream, comprises:

determining an area to be decoded of a current video frame of the video, wherein the area to be decoded at least comprises a first display area corresponding to the basic area; and
decoding the bitstream based on the area to be decoded.

18. The method according to claim 17, wherein the determining an area to be decoded, comprises:
determining the area to be decoded based on at least one selected from the group consisting of a quantity of pixels to be displayed and a quantity of coding units to be displayed of the current video frame, a quantity of coding units of the first display area, a quantity of displayed pixels of a previous video frame, and a quantity of coding units of a decoded area of the previous video frame.

19. The method according to claim 18, wherein the determining an area to be decoded, comprises:

in response to the quantity of coding units to be displayed of the current video frame being greater than the quantity of coding units of the decoded area of the previous video frame, or
in response to the quantity of coding units to be displayed of the current video frame being equal to the quantity of coding units of the decoded area of the previous video frame, and the quantity of pixels to be displayed of the current video frame being greater than the quantity of displayed pixels of the previous video frame,
determining that the area to be decoded comprises a decoded area of the previous video frame and one new display sub-area.

20. The method according to claim 18 or 19, wherein the determining an area to be decoded, comprises:

in response to the quantity of coding units to be displayed of the current video frame being greater than the quantity of coding units of the first display area, and the quantity of coding units to be displayed of the current video frame being smaller than the quantity of coding units of the decoded area of the previous video frame, or
in response to the quantity of coding units to be displayed of the current video frame being greater than the quantity of coding units of the first display area, the quantity of coding units to be displayed of the current video frame being equal to the quantity of coding units of the decoded area of the previous video frame, and the quantity of pixels to be displayed of the current video frame being not greater than the quantity of displayed pixels of the previous video frame,
determining that the area to be decoded of the current video frame comprises an area to be displayed of the current video frame.

21. A video data processing apparatus, comprising:

a determining module, configured to determine, for a current video block of the video, to use a first inter-prediction mode for coding, and
a performing module, configured to perform a conversion between the current video block and a bitstream of the video based on the determining,
wherein in the first inter-prediction mode, a derivation of a motion vector of the current video block is based on a basic area in the video corresponding to a first display mode.

22. A display apparatus, comprising: a video data processing apparatus and a scroll screen,
wherein the video data processing apparatus is configured to decode a received bitstream according to the method of any one of claims 1-20 and send a decoded pixel value to the scroll screen for display.

23. The display apparatus according to claim 22, wherein in response to the scroll screen comprising a display area and a non-display area in operation, the video data processing apparatus decodes the bitstream based on a size of the display area at a current moment and a previous frame moment.

24. The display apparatus according to claim 22 or 23, further comprising: a curling state judgment apparatus, wherein the curling state judgment apparatus is configured to detect a size of a display area of the scroll screen and transmit the size of the display area to the video data processing apparatus, to cause the video data processing apparatus to decode the bitstream based on the size of the display area at a current moment and a previous frame moment.

25. A video data processing apparatus, comprising:

   a processor; and
   a memory, comprising one or more computer program modules,
   wherein the one or more computer program modules are stored in the memory and configured to be executed by the processor, and the one or more computer program modules comprise instructions used to perform the video data processing method according to any one of claims 1-20.

26. A computer-readable storage medium, wherein the computer-readable storage medium stores computer instructions, and when the instructions are executed by a processor, the processor is caused to implement steps of the video data processing method according to any one of claims 1-20.

Fully extended state of
a scroll screen

Partially extended
state of a scroll screen

The non-display
area is still decoded.

Fig. 1

100

Source device
**102**

Video source
**104**

Memory
**106**

Video encoder
**200**

Output
interface
**108**

110

112

114

Destination device
**116**

Display device
**118**

Memory
**120**

Video decoder
**300**

Input interface
**122**

Fig. 2

Fig. 3

Fig. 4

Fig. 5

Fig. 6

Fig. 7A

Fig. 7B

Reference
point vector **b**

Reference
point vector **a**

Current block

Reference
point vector **b**

Reference
point vector **a**

Before division

After division and
estimation

Fig. 8A

Reference
point vector **b**

Reference
point vector **a**

Current block

Reference
point vector **c**

Reference
point vector **b**

Reference
point vector **a**

Reference
point vector **c**

Before division

After division and
estimation

Fig. 8B

10

For a current video block of a video, determine to use a first
inter-frame prediction mode for encoding and decoding

S101

On the basis of the determining, perform conversion
between the current video block and a bitstream of the
video, wherein the derivation of a motion vector of the
current video block in the first inter-frame prediction mode
is based on a basic region, corresponding to a first display
mode, in the video

S102

Fig. 9

Rolling
process

Fig. 10

basic_tile    enhanced_tile

Fig. 11

Fig. 12A

Fig. 12B

$basic\_tile_t$

basic_tile

$basic\ tile_l$  PU(x,y)  $basic\_tile_r$

$basic\_tile_b$

Fig. 13

basic_tile  enhanced_tile

$basic\_tile_r$

C

H

Fig. 14

30

| Receiving a bitstream of a video | $\sim$ S301 |

| Determining that a current video block of the video is encoded and decoded using a first inter-prediction mode | $\sim$ S302 |

| Decoding the bitstream based on the determining, where in the first inter-prediction mode, a derivation of a motion vector of the current video block is based on a basic area in the video corresponding to a first display mode | $\sim$ S303 |

Fig. 15

Fig. 16

At an encoding end, partitioning a current video frame into *basic_tile* and *enhanced_tile* ∿ S201

*basic_tile*: using the encoding mode of removing the independent tile that is on the right side
*enhanced_tile*: using a mode of limiting the encoding mode and range of the MV ∿ S202

Acquiring a quantity $l_t$ of unrolled pixels of the scroll screen at the current moment and a quantity $l_{t-1}$ of unrolled pixels of the scroll screen at the previous frame moment ∿ S203

Receiving the bitstream of the video by the decoder ∿ S204

Acquiring a quantity $b_{t-1}$ of CTU(s) in a decoded area of the previous frame ∿ S205

According to $l_t$, $l_{t-1}$, $b_{t-1}$, determining an area to be decoded ∿ S206

Decoding the area to be decoded, and padding the undecoded area ∿ S207

Sending to a display terminal for display ∿ S208

Fig. 17

40

Determining module 401

Performing module 402

Fig. 18

90

Processor
910

920

Computer program
module 921

Fig. 19

**600**

601

Processor

602

ROM

603

RAM

604

Bus

605

I/O interface

606

Input
apparatus

607

Output
apparatus

608

Memory

609

Communication
apparatus

610

Driver

611

Removable
medium

Fig. 20

70

Computer
instruction 111

Fig. 21

## INTERNATIONAL SEARCH REPORT

| International application No. |
| --- |
| **PCT/CN2023/133303** |

### A. CLASSIFICATION OF SUBJECT MATTER

H04N 19/503(2014.01)i

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, ENTXTC, VEN, CJFD, CNKI, IEEE, JVET: 滑卷, 卷屏, 卷曲, 卷绕, 卷轴, 扩展, 拉伸, 显示, 模式, 屏, 尺寸, 编码, 解码, 译码, 帧间预测, 运动矢量, roll, slide, extend, display, mode, screen, size, +cod+, inter prediction, motion vector, MV

### C. DOCUMENTS CONSIDERED TO BE RELEVANT

| Category* | Citation of document, with indication, where appropriate, of the relevant passages | Relevant to claim No. |
| --- | --- | --- |
| X | WO 2021194308 A1 (LG ELECTRONICS INC.) 30 September 2021 (2021-09-30) description, paragraphs 160-358, and figures 12-13 | 1-3, 13-17, 21, 25-26 |
| X | WO 2021194307 A1 (LG ELECTRONICS INC.) 30 September 2021 (2021-09-30) description, paragraphs 160-358, and figures 12-13 | 1-3, 13-17, 21, 25-26 |
| Y | WO 2021194308 A1 (LG ELECTRONICS INC.) 30 September 2021 (2021-09-30) description, paragraphs 160-358, and figures 12-13 | 22-24 |
| Y | WO 2021194307 A1 (LG ELECTRONICS INC.) 30 September 2021 (2021-09-30) description, paragraphs 160-358, and figures 12-13 | 22-24 |
| Y | CN 114168051 A (SHENZHEN TRANSSION HOLDINGS CO., LTD.) 11 March 2022 (2022-03-11) description, paragraphs 84-109, and figures 3-5 | 22-24 |
| Y | CN 108351706 A (SAMSUNG ELECTRONICS CO., LTD.) 31 July 2018 (2018-07-31) description, paragraphs 6-8 | 22-24 |

☑ Further documents are listed in the continuation of Box C. ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 January 2024** | **29 January 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/133303** |

### C. DOCUMENTS CONSIDERED TO BE RELEVANT

| Category* | Citation of document, with indication, where appropriate, of the relevant passages | Relevant to claim No. |
| --- | --- | --- |
| Y | CN 108735100 A (SHANGHAI CHUANGGONG TELECOM TECHNOLOGY CO., LTD.) 02 November 2018 (2018-11-02) description, paragraphs 4-20 | 22-24 |
| Y | CN 108766235 A (SHANGHAI CHUANGGONG TELECOM TECHNOLOGY CO., LTD.) 06 November 2018 (2018-11-06) description, paragraphs 5-6 | 22-24 |
| Y | CN 111708506 A (SHANGHAI JUANSHI TECHNOLOGY CO., LTD.) 25 September 2020 (2020-09-25) description, paragraphs [0007]-[0035] | 22-24 |
| A | CN 105681805 A (PEKING UNIVERSITY SHENZHEN GRADUATE SCHOOL) 15 June 2016 (2016-06-15) entire document | 1-26 |
| A | CN 112262580 A (QUALCOMM INC.) 22 January 2021 (2021-01-22) entire document | 1-26 |
| A | CN 105519117 A (MITSUBISHI ELECTRIC CORP.) 20 April 2016 (2016-04-20) entire document | 1-26 |
| A | US 2022248028 A1 (SAMSUNG ELECTRONICS CO., LTD.) 04 August 2022 (2022-08-04) entire document | 1-26 |

Form PCT/ISA/210 (second sheet) (July 2022)

**INTERNATIONAL SEARCH REPORT**
Information on patent family members

International application No.

**PCT/CN2023/133303**

| Patent document cited in search report | | | Publication date (day/month/year) | Patent family member(s) | | | Publication date (day/month/year) |
|---|---|---|---|---|---|---|---|
| WO | 2021194308 | A1 | 30 September 2021 | US | 2023021409 | A1 | 26 January 2023 |
| | | | | JP | 2023518990 | A | 09 May 2023 |
| | | | | VN | 92214 | A | 26 December 2022 |
| | | | | CN | 115699755 | A | 03 February 2023 |
| | | | | IN | 202217060147 | A | 11 August 2023 |
| WO | 2021194307 | A1 | 30 September 2021 | EP | 4131959 | A1 | 08 February 2023 |
| | | | | US | 2023012751 | A1 | 19 January 2023 |
| | | | | KR | 20220159415 | A | 02 December 2022 |
| | | | | JP | 2023162431 | A | 08 November 2023 |
| | | | | JP | 7348411 | B2 | 20 September 2023 |
| | | | | VN | 92197 | A | 26 December 2022 |
| | | | | CN | 115668935 | A | 31 January 2023 |
| | | | | JP | 2023519332 | W | 10 May 2023 |
| | | | | IN | 202217060145 | A | 11 August 2023 |
| CN | 114168051 | A | 11 March 2022 | None | | | |
| CN | 108351706 | A | 31 July 2018 | KR | 20170058220 | A | 26 May 2017 |
| | | | | KR | 102500060 | B1 | 16 February 2023 |
| | | | | US | 2017140504 | A1 | 18 May 2017 |
| | | | | WO | 2017086652 | A1 | 26 May 2017 |
| | | | | KR | 20170058816 | A | 29 May 2017 |
| | | | | EP | 3350673 | A1 | 25 July 2018 |
| | | | | EP | 3350673 | A4 | 15 August 2018 |
| | | | | IN | 201817018999 | A | 07 September 2018 |
| | | | | US | 10977771 | B2 | 13 April 2021 |
| | | | | KR | 102387115 | B1 | 18 April 2022 |
| | | | | KR | 20220047962 | A | 19 April 2022 |
| | | | | EP | 3350673 | B1 | 11 May 2022 |
| | | | | EP | 4057121 | A1 | 14 September 2022 |
| | | | | KR | 102476235 | B1 | 12 December 2022 |
| CN | 108735100 | A | 02 November 2018 | None | | | |
| CN | 108766235 | A | 06 November 2018 | CN | 108766235 | B | 23 April 2021 |
| CN | 111708506 | A | 25 September 2020 | CN | 111708506 | B | 22 November 2022 |
| CN | 105681805 | A | 15 June 2016 | CN | 105681805 | B | 21 May 2019 |
| CN | 112262580 | A | 22 January 2021 | US | 2019313115 | A1 | 10 October 2019 |
| | | | | US | 10958928 | B2 | 23 March 2021 |
| | | | | WO | 2019199953 | A1 | 17 October 2019 |
| | | | | CN | 112262580 | B | 07 September 2021 |
| CN | 105519117 | A | 20 April 2016 | KR | 20160054530 | A | 16 May 2016 |
| | | | | WO | 2015034061 | A1 | 12 March 2015 |
| | | | | JPWO | 2015034061 | A1 | 02 March 2017 |
| | | | | EP | 3043560 | A1 | 13 July 2016 |
| | | | | EP | 3043560 | A4 | 01 March 2017 |
| | | | | US | 2016234523 | A1 | 11 August 2016 |
| US | 2022248028 | A1 | 04 August 2022 | EP | 4054192 | A1 | 07 September 2022 |
| | | | | KR | 20220046656 | A | 14 April 2022 |
| | | | | WO | 2021086153 | A1 | 06 May 2021 |
| | | | | IN | 202247029033 | A | 03 June 2022 |

Form PCT/ISA/210 (patent family annex) (July 2022)